# EUROPEAN PATENT APPLICATION

(11) **EP 4 749 813 A1**
(43) Date of publication of application: **27.05.2026**
(21) Application number: 24842783.3
(22) Date of filing: 12.04.2024
(51) Int. Cl.: H01M 50/645, H01M 10/04, H01M 10/052, H01M 10/0566, H01M 10/058, H01M 50/103, H01M 50/15

(54) **BATTERY AND METHOD FOR MANUFACTURING BATTERY**

(30) Priority: 19.07.2023 JP 2023117398
(71) Applicant: Vehicle Energy Japan Inc., Hitachinaka-shi, Ibaraki 312-8505 (JP)
(72) Inventor: HOSOYA Kiyoharu, Hitachinaka-shi, Ibaraki 312-8505 (JP); TANAKA Nobuyoshi, Hitachinaka-shi, Ibaraki 312-8505 (JP)
(74) Representative: MERH-IP Matias Erny Reichl Hoffmann Patentanwälte PartG mbB
(86) International application number: PCT/JP2024/014851
(87) International publication number: WO 2025/017983

(57) **Abstract**

A battery includes a charge/discharge body containing an electrolyte, a housing body (lid 420) including a liquid introduction hole (420c), and a sealing plug (440) inserted in the liquid introduction hole (420c). The liquid introduction hole (420c) in the lid (420) includes a first penetrating portion (420P) and a second penetrating portion (420Q). The first penetrating portion (420P) includes a first inner circumferential surface (423) and a confronting surface (425). The second penetrating portion (420Q) includes a second inner circumferential surface (427). The sealing plug (440) includes a first insert (440P) and a second insert (440Q). The first insert (440P) includes a first outer circumferential surface (443) and a confronted surface (445). The second insert (440Q) includes a second outer circumferential surface (447). The length (L1) of a clearance (S1) between the second inner circumferential surface (427) of the lid (420) and the second outer circumferential surface (447) of the sealing plug (440) is larger at least partly than the length (L2) of a clearance (S2) between the first inner circumferential surface (423) of the lid (420) and the first outer circumferential surface (443) of the sealing plug (440).

## Description

### Technical Field

The present invention relates to a battery and a method of manufacturing a battery.

### Background Art

There has heretofore been known a battery having a sealing plug that seals a liquid introduction hole (see, for example, Patent Document 1).

### Prior Art Document

### Patent Document

Patent Document 1: Japanese Patent No. 4110632

### Summary of the Invention

### Problems to be Solved by the Invention

It has been demanded that a battery should have a sealing plug and a housing body sufficiently attached and joined to each other.

### Means for Solving the Problems

A battery according to the present invention has a charge/discharge body containing an electrolyte, a housing body housing the charge/discharge body and including a liquid introduction hole for introducing the electrolyte, and a sealing plug inserted in the liquid introduction hole and stacked on and joined to the housing body. The liquid introduction hole in the housing body includes a first penetrating portion penetrating the housing body along a stacked direction along which the housing body and the sealing plug are stacked together and facing outside of the housing body, and a second penetrating portion penetrating the housing body along the stacked direction and facing inside of the housing body, the second penetrating portion being contiguous to the first penetrating portion along the stacked direction and having a smaller opening than the first penetrating portion. The first penetrating portion includes a first inner circumferential surface along the stacked direction and a confronting surface disposed transversely adjacent to the first inner circumferential surface and facing the stacked direction. The second penetrating portion includes a second inner circumferential surface along the stacked direction, the second inner circumferential surface being disposed transversely adjacent to the confronting surface and positioned on the inside of the housing body relative to the first inner circumferential surface. The sealing plug includes a first insert inserted in the first penetrating portion along the stacked direction and a second insert inserted in the second penetrating portion along the stacked direction and contiguous to the first insert along the stacked direction, the second insert being smaller than the first insert in area facing the stacked direction. The first insert includes a first outer circumferential surface facing the first inner circumferential surface of the housing body, and a confronted surface disposed transversely adjacent to the first inner circumferential surface and facing the confronting surface of the housing body. The second insert includes a second outer circumferential surface disposed transversely adjacent to the confronted surface and positioned on the inside of the housing body relative to the first outer circumferential surface, the second outer circumferential surface facing the second inner circumferential surface of the housing body. A length of a clearance between the second inner circumferential surface of the housing body and the second outer circumferential surface of the sealing plug is larger at least partly than a length of a clearance between the first inner circumferential surface of the housing body and the first outer circumferential surface of the sealing plug.

A method of manufacturing the battery according to the present invention has a first step of, while the confronting surface of the housing body and the confronted surface of the sealing plug are facing each other in the stacked direction, bringing the housing body and the sealing plug closer to each other along the stacked direction until the housing body and the sealing plug are attached to each other, and a second step of welding the housing body and the sealing plug to each other after the first step.

### Advantages of the Invention

According to the present invention, the sealing plug and the storage body of the battery are sufficiently attached and joined to each other.

### Brief Description of the Drawings

[FIG. 1] FIG. 1 is a perspective view illustrating a battery 1 according to an embodiment.
[FIG. 2] FIG. 2 is a side elevational view illustrating a region 2A-2B of FIG. 1 in which components around a positive electrode terminal 310 of the battery 1 are illustrated in cross section.
[FIG. 3] FIG. 3 is a side elevational view of a region 3A-3B of FIG. 1 in which components around a negative electrode terminal 320 of the battery 1 are illustrated in cross section.
[FIG. 4] FIG. 4 is a partly exploded perspective view of the battery 1.
[FIG. 5] FIG. 5 is a perspective view of a charge/discharge body 100 illustrated in FIG. 4.
[FIG. 6] FIG. 6 is a side elevational view of a region 6A-6B of FIG. 5 in which portions of the charge/discharge body 100 are illustrated in cross section.
[FIG. 7] FIG. 7 is an exploded perspective view of the components around the positive electrode terminal 310 of the battery 1.
[FIG. 8] FIG. 8 is an exploded perspective view of components around a rupture valve 430 and a sealing plug 440 of the battery 1.
[FIG. 9] FIG. 9 is an exploded end view of a central portion of an outer casing 400 according to the embodiment.
[FIG. 10] FIG. 10 is an exploded perspective view of the components around the negative electrode terminal 320 of the battery 1.
[FIG. 11] FIG. 11 is an end view of a central portion of the outer casing 400 according to the embodiment.
[FIG. 12] FIG. 12 is an end view illustrating the manner in which the sealing plug 440 and the lid 420 are attached and joined to each other in a method of manufacturing the battery 1 according to the embodiment.
[FIG. 13] FIG. 13 is an end view of a central portion of an outer casing 400A according to a modification 1 of the embodiment.
[FIG. 14] FIG. 14 is an end view of a central portion of an outer casing 400B according to a modification 2 of the embodiment.
[FIG. 15] FIG. 15 is an end view of a central portion of an outer casing 400C according to a modification 3 of the embodiment.
[FIG. 16] FIG. 16 is an end view of a central portion of an outer casing 400D according to a modification 4 of the embodiment.
[FIG. 17] FIG. 17 is an end view of a central portion of an outer casing 400E according to a modification 5 of the embodiment.
[FIG. 18] FIG. 18 is an end view of a central portion of an outer casing 400F according to a modification 6 of the embodiment.
[FIG. 19] FIG. 19 is an end view of a central portion of an outer casing 400G according to a modification 7 of the embodiment.
[FIG. 20] FIG. 20 is an end view illustrating the manner in which a sealing plug 770 and the lid 420 are attached and joined to each other in a method of manufacturing the battery 1 according to the modification 7 of the embodiment.
[FIG. 21] FIG. 21 is an end view of a central portion of an outer casing 400H according to a modification 8 of the embodiment.
[FIG. 22] FIG. 22 is an end view of a central portion of an outer casing 400J constructed in a best mode including the structural details of the embodiment and the modifications 1 through 8 of the embodiment.
[FIG. 23] FIG. 23 is an end view of a central portion of an outer casing 400K in which a sealing plug 820 and the lid 420 are disposed off-center and that is applicable to the structural details of the embodiment and the modifications 1 through 8 of the embodiment.

### Modes for Carrying Out the Invention

An embodiment of the present invention will be described below with reference to the drawings. For easier understanding of the embodiment, the sizes and ratios of components may be depicted as exaggerated in each of the drawings. In each of the drawings, identical parts are denoted by identical reference characters. In each of the drawings, a longitudinal direction X, a transverse direction Y, and a heightwise direction Z of a battery 1 are indicated by the respective arrows. In each of the drawings, the longitudinal direction X, the transverse direction Y, and the heightwise direction Z of the battery 1 indicate relative positional relations in the same drawing. Specifically, if the battery 1 is turned 180 degrees such that its upper and lower surfaces are reversed or the battery 1 is turned 90 degrees such that its upper surface is oriented as a side surface, then the longitudinal direction X, the transverse direction Y, and the heightwise direction Z of the battery 1 are changed. In each of the drawings, a stacked direction V along which a sealing plug 440, a lid 420, and other members are stacked is indicated by the arrow. The stacked direction V along which the sealing plug 440, the lid 420, and other members are stacked represents the heightwise direction Z of the battery 1.

### (Structure of the battery 1 according to the embodiment)

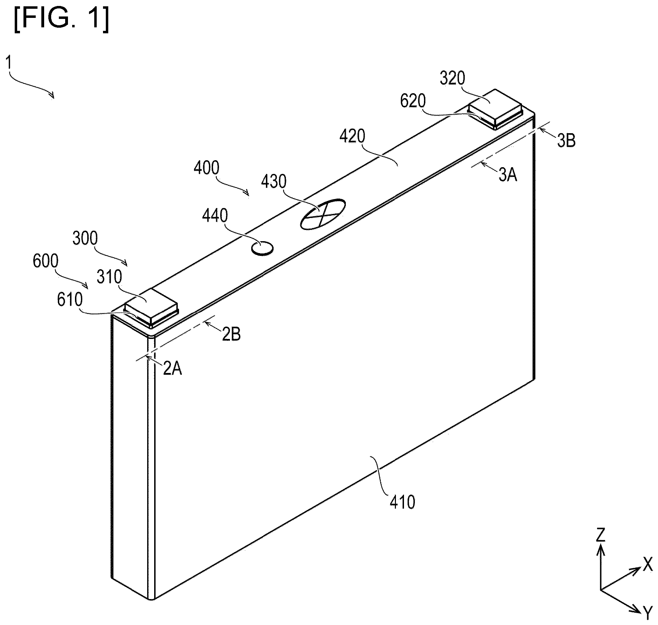

The structure of the battery 1 will be described below with reference to FIGS. 1 through 11.

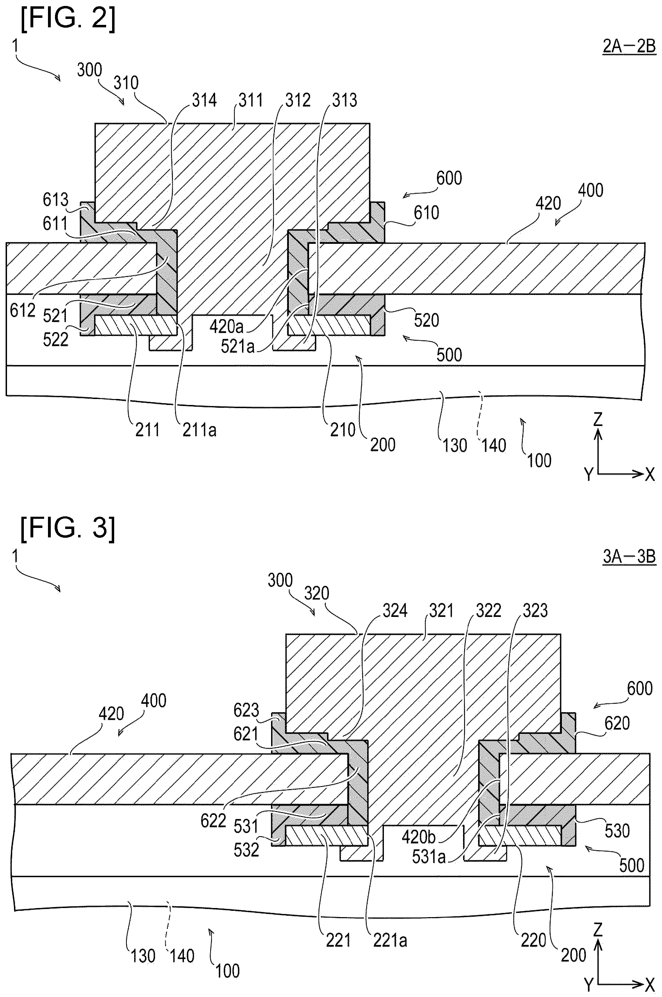

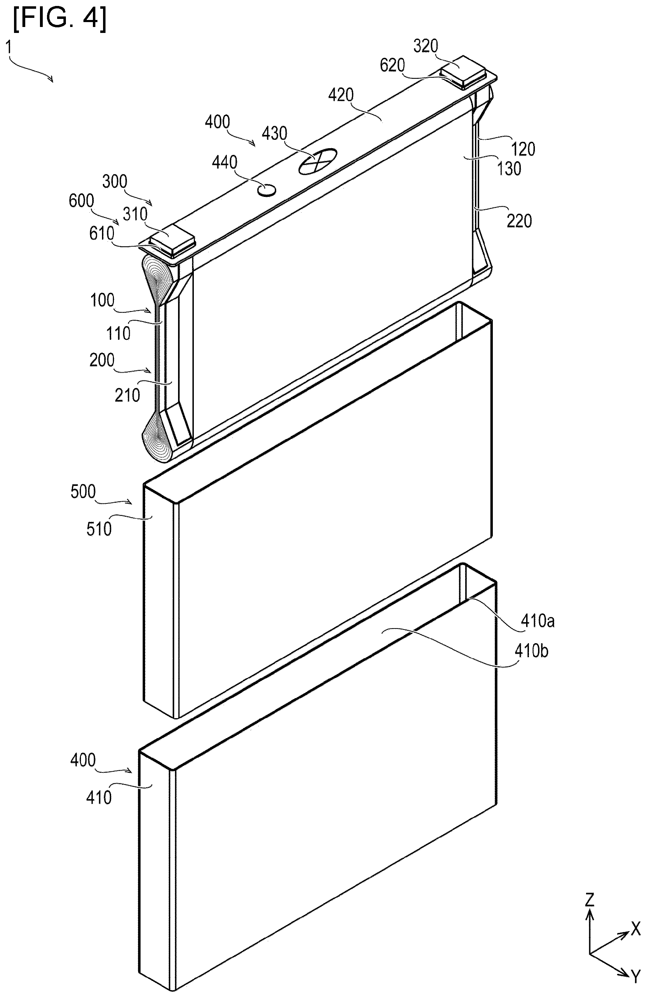

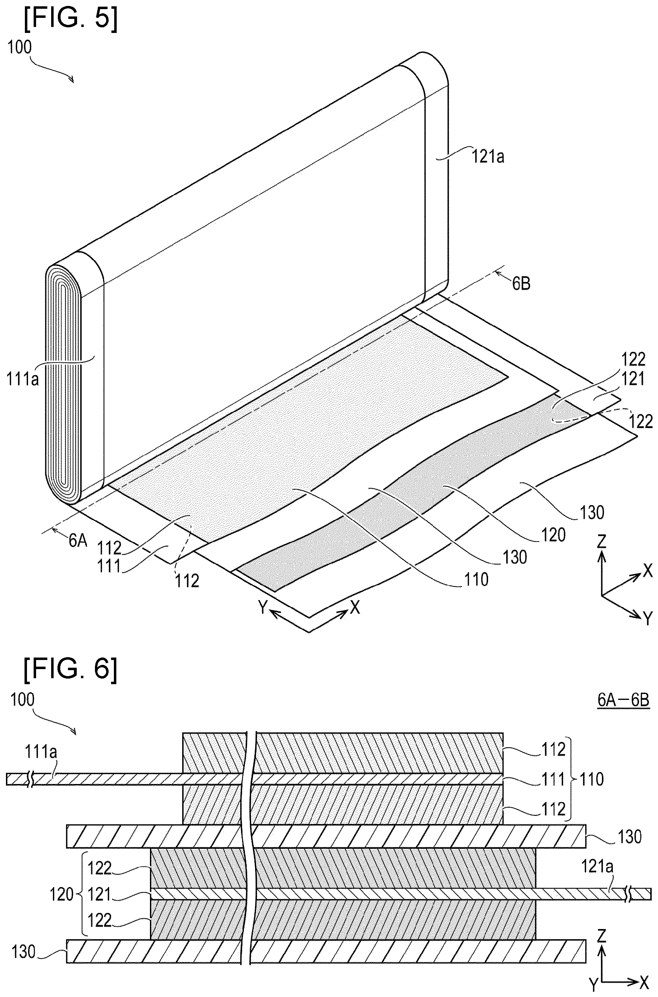

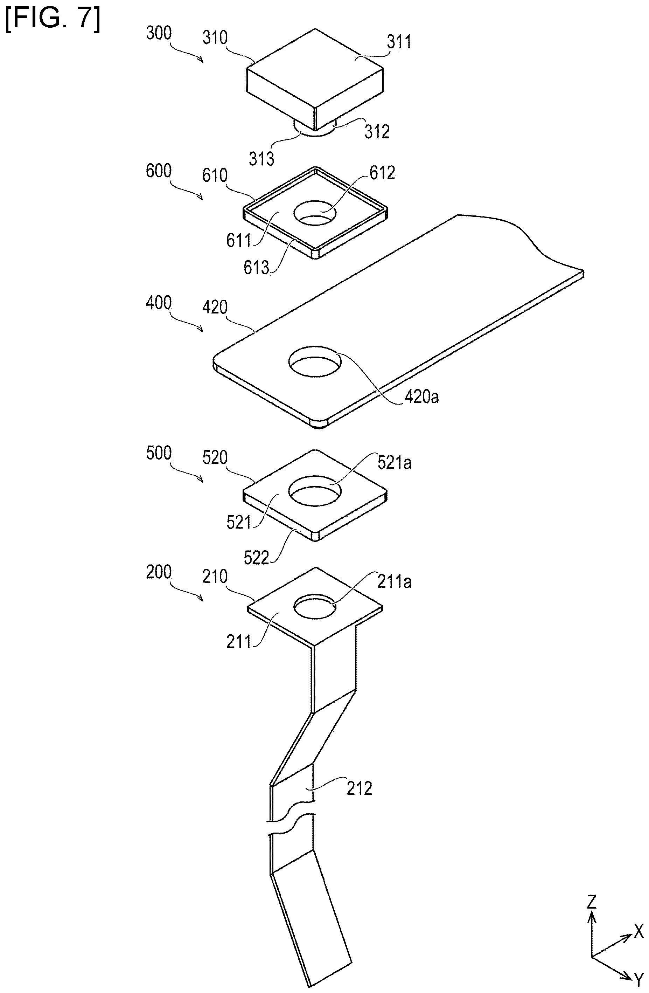

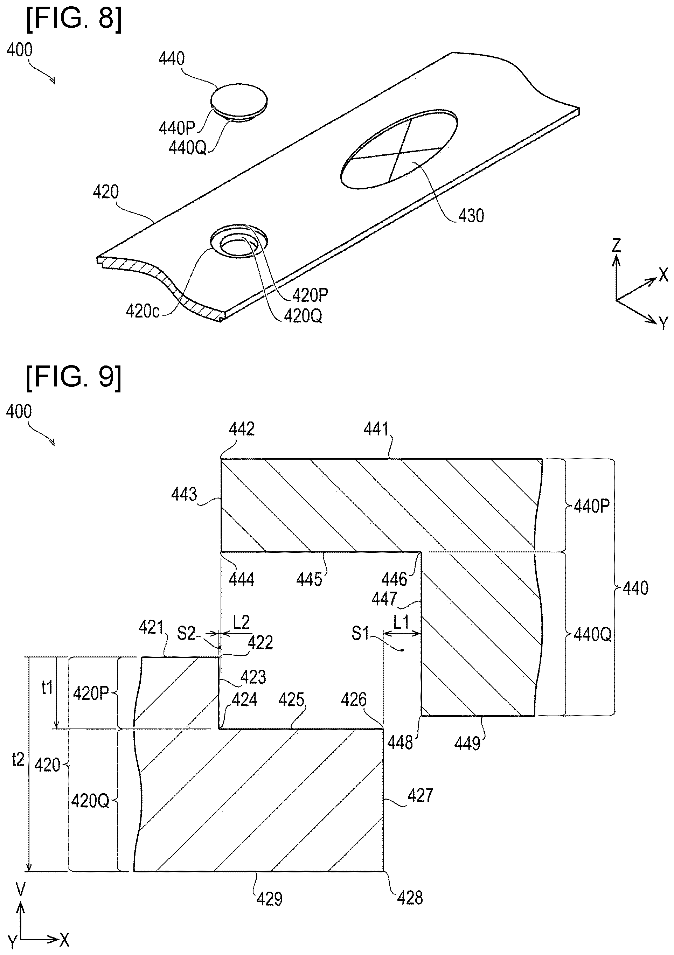

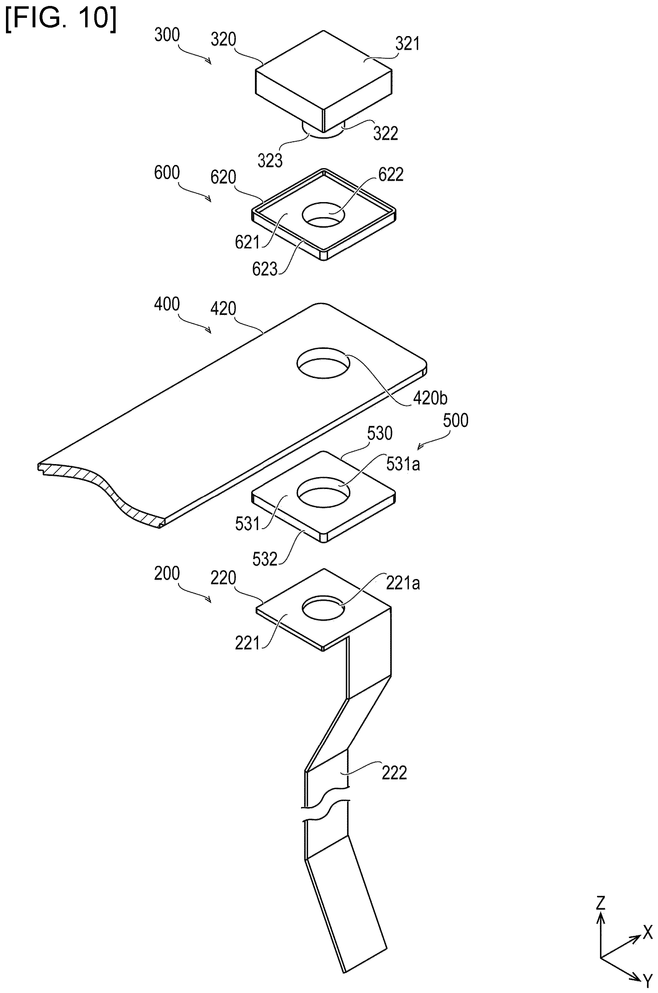

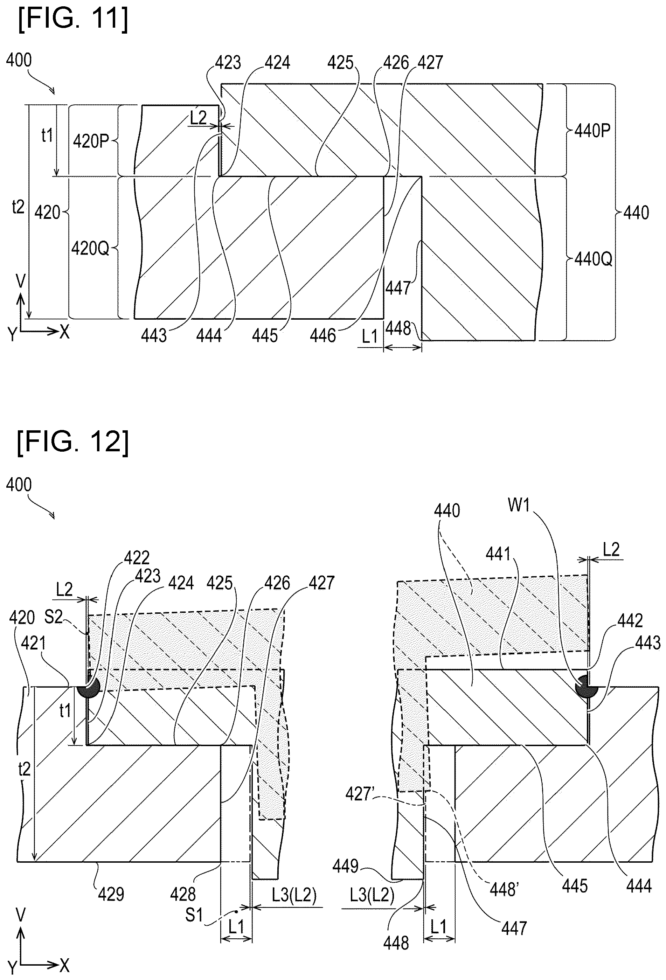

FIG. 1 is a perspective view illustrating the battery 1 according to the embodiment. FIG. 2 is a side elevational view illustrating a region 2A-2B of FIG. 1 in which components around a positive electrode terminal 310 of the battery 1 are illustrated in cross section. FIG. 3 is a side elevational view of a region 3A-3B of FIG. 1 in which components around a negative electrode terminal 320 of the battery 1 are illustrated in cross section. FIG. 4 is a partly exploded perspective view of the battery 1. FIG. 5 is a perspective view of a charge/discharge body 100 illustrated in FIG. 4. FIG. 6 is a side elevational view of a region 6A-6B of FIG. 5 in which portions of the charge/discharge body 100 are illustrated in cross section. FIG. 7 is an exploded perspective view of the components around the positive electrode terminal 310 of the battery 1. FIG. 8 is an exploded perspective view of components around a rupture valve 430 and a sealing plug 440 of the battery 1. FIG. 9 is an exploded end view of a central portion of an outer casing 400 according to the embodiment. FIG. 10 is an exploded perspective view of the components around the negative electrode terminal 320 of the battery 1. FIG. 11 is an end view of a central portion of the outer casing 400 according to the embodiment.

The battery 1 includes a charge/discharge body 100 that can be charged with and can discharge electricity, a current collecting body 200 connected to the charge/discharge body 100, an electrode terminal 300 connected to the current collecting body 200, an outer casing 400 that houses the components of the battery 1 therein or in which the components of the battery 1 are mounted, an insulator 500 insulating the components of the battery 1 and the outer casing 400 from each other, and a sealing body 600 sealing the components of the battery 1 and the outer casing 400.

The charge/discharge body 100 is charged with and discharges electricity. The charge/discharge body 100 illustrated in FIGS. 2 through 6 includes a positive electrode 110, a negative electrode 120, separators 130, and an electrolyte 140. The charge/discharge body 100 is in the form of a structural assembly of the positive electrode 110, the separator 130, the negative electrode 120, and the separator 130 that are stacked in the order named, the structural assembly being wound into an elongate cuboidal shape. The charge/discharge body 100 may have its assembly layers wound or stacked.

The positive electrode 110 includes an elongate positive current collector layer 111 and positive active-material layers 112 joined to both surfaces of the positive current collector layer 111. As illustrated in FIG. 5, the positive electrode 110 is wound, together with the negative electrode 120 and the separators 130, into the elongate cuboidal shape with ends curved into a protruding shape. The positive current collector layer 111 has a side 111a not covered with the separators 130 and exposed outwardly. The positive active-material layers 112 are not joined to the side 111a. As illustrated in FIG. 4, the side 111a has a central portion bundled and compressed in the transverse direction Y of the battery 1. The side 111a is joined to a positive electrode current collection plate 210. The positive active-material layers 112 are joined to the portion of the positive current collector layer 111 that excludes the side 111a. The positive active-material layers 112 are joined to both surfaces of the positive current collector layer 111. The positive electrode 110 may be of such a structure that a positive active-material layer 112 is joined to only one surface of the positive current collector layer 111. The positive current collector layer 111 is made of aluminum or aluminum alloy, for example. The positive active-material layers 112 contain a positive active material made of a lithium-contained composite oxide, a binder, and a conductive additive, for example. A metal element such as nickel (Ni), cobalt (Co), or manganese (Mn) and lithium (Li) are used as the lithium-contained composite oxide, for example.

The negative electrode 120 includes an elongate negative current collector layer 121 and negative active-material layers 122 joined to both surfaces of the negative current collector layer 121. As illustrated in FIG. 5, the negative electrode 120 is wound, together with the positive electrode 110 and the separators 130, into the elongate cuboidal shape with ends curved into a protruding shape. The negative current collector layer 121 has a side 121a not covered with the separators 130, and exposed outwardly. The negative active-material layers 122 are not joined to the side 121a. As illustrated in FIG. 4, the side 121a has a central portion bundled and compressed in the transverse direction Y of the battery 1. As illustrated in FIG. 5, the side 121a of the negative current collector layer 121 is disposed opposite the side 111a of the positive current collector layer 111 along the longitudinal direction X of the battery 1. The side 121a is joined to a negative electrode current collection plate 220. The negative active-material layers 122 are joined to the portion of the negative current collector layer 121 that excludes the side 121a. The negative active-material layers 122 are joined to both surfaces of the negative current collector layer 121. The negative electrode 120 may be of such a structure that a negative active-material layer 122 is joined to only one surface of the negative current collector layer 121. The negative current collector layer 121 is made of copper or copper alloy, for example. The negative active-material layers 122 contain a negative active material made of a carbon-based material, a binder, and a conductive additive, for example. Graphite, for example, is used as the carbon-based material.

The separators 130 provide insulation between the positive electrode 110 and the negative electrode 120 while passing lithium ions therethrough. The separators 130 are of an elongate shape. The separators 130 are made of a porous material. Polyethylene (PE) or polypropylene (PP) is used as the material of the separators 130. The separators 130 may be replaced with an insulating member. The insulating member may be disposed on the side of the positive electrode 110 that faces the negative electrode 120. The insulating member may be disposed on the side of the negative electrode 120 that faces the positive electrode 110. The insulating member may be heat-resistant. With this arrangement, the separators 130 are not indispensable.

The electrolyte 140 allows lithium ions to flow between the positive electrode 110 and the negative electrode 120. The electrolyte 140 may also be referred to as an electrolytic solution. The electrolyte 140 contains a solvent and a solute. The electrolyte 140 may include an additive. The solvent includes an organic solvent, for example. As the organic solvent, carbonic ester such as ethylene carbonate, for example, is used. The solute includes a lithium salt, for example. Lithium hexafluorophosphate (LiPF₆), for example, is used as the lithium salt.

The current collecting body 200 is connected to the charge/discharge body 100. The current collecting body 200 is also referred to as a current collection plate. The current collecting body 200 illustrated in FIGS. 2 through 4, 7, and 10 includes a positive electrode current collection plate 210 and a negative electrode current collection plate 220.

As illustrated in FIG. 4, the positive electrode current collection plate 210 achieves electrical connection between the positive electrode 110 and the positive electrode terminal 310. As illustrated in FIG. 7, the positive electrode current collection plate 210 includes a base 211 and a current collector 212. As illustrated in FIG. 2, the base 211 is joined to a joint 313 of the positive electrode terminal 310. The base 211 is joined to the joint 313 when the joint 313 is crimped, for example. As illustrated in FIG. 7, the base 211 is shaped as a plate. The base 211 has a circular insertion hole 211a formed therein. As illustrated in FIG. 2, the joint 313 of the positive electrode terminal 310 is inserted in the insertion hole 211a in the base 211. The current collector 212 is joined to the side 111a of the positive electrode 110 by ultrasonic joining or laser welding, for example. As illustrated in FIG. 7, the current collector 212 is formed downwardly in the heightwise direction Z from an outer edge of the base 211 while being bent. The current collector 212 extends perpendicularly to the base 211. The current collector 212 is integrally formed with the base 211. The current collector 212 is bent toward the transverse direction Y along an outer shape of the side 111a of the positive electrode 110. The positive electrode current collection plate 210 is made of aluminum or aluminum alloy, for example.

As illustrated in FIG. 4, the negative electrode current collection plate 220 achieves electrical connection between the negative electrode 120 and the negative electrode terminal 320. The negative electrode current collection plate 220 and the positive electrode current collection plate 210 are symmetrical in outer shape with respect to the longitudinal direction X. As illustrated in FIG. 10, the negative electrode current collection plate 220 includes a base 221 and a current collector 222. As illustrated in FIG. 3, the base 221 is joined to a joint 323 of the negative electrode terminal 320. The base 221 is joined to the joint 323 when the joint 323 is crimped, for example. As illustrated in FIG. 10, the base 221 is shaped as a plate. The base 221 has a circular insertion hole 221a formed therein. As illustrated in FIG. 3, the joint 323 of the negative electrode terminal 320 is inserted in the insertion hole 221a in the base 221. The current collector 222 is joined to the side 121a of the negative electrode 120 by ultrasonic joining or laser welding, for example. As illustrated in FIG. 10, the current collector 222 is formed downwardly in the heightwise direction Z from an outer edge of the base 221 while being bent. The current collector 222 extends perpendicularly to the base 221. The current collector 222 is integrally formed with the base 221. The current collector 222 is bent toward the transverse direction Y along an outer shape of the side 121a of the negative electrode 120. The negative electrode current collection plate 220 is made of copper or copper alloy, for example.

The electrode terminal 300 is connected to the current collecting body 200. The electrode terminal 300 illustrated in FIGS. 1 through 4, 7, and 10 includes a positive electrode terminal 310 and a negative electrode terminal 320.

As illustrated in FIG. 4, the positive electrode terminal 310 is connected to the positive electrode current collection plate 210. As illustrated in FIG. 7, the positive electrode terminal 310 includes a base 311 shaped as a cuboidal plate, an insert 312 shaped as a cylinder protruding downwardly in FIG. 7 from the base 311, and the joint 313 shaped as a hollow cylinder projecting downwardly in FIG. 7 from an outer circumferential portion of the insert 312. As illustrated in FIG. 2, the positive electrode terminal 310 includes an annular sealing portion 314 on the boundary between the base 311 and the inside of the insert 312. The base 311 is disposed on a base 611 of a positive electrode gasket 610. As illustrated in FIG. 2, the insert 312 is inserted in the positive electrode gasket 610. As illustrated in FIG. 2, the joint 313 protrudes downwardly in FIG. 2 from the insertion hole 211a in the base 211 of the positive electrode current collection plate 210. The protruding portion of the joint 313 is spread radially outwardly and joined to the base 211. The joint 313 is crimped on the base 211. Moreover, the joint 313 is welded to the base 211. The sealing portion 314 represents a protruding portion protruding toward the positive electrode gasket 610. As illustrated in FIG. 2, the sealing portion 314 of the positive electrode terminal 310 cooperates with the lid 420 in compressing part of the base 611 of the positive electrode gasket 610 along the heightwise direction Z, thereby sealing the positive electrode terminal 310 and the lid 420 with the positive electrode gasket 610. The positive electrode terminal 310 is made of aluminum or aluminum alloy, for example.

As illustrated in FIG. 4, the negative electrode terminal 320 is connected to the negative electrode current collection plate 220. The negative electrode terminal 320 is similar in outer shape to the positive electrode terminal 310. As illustrated in FIG. 10, the negative electrode terminal 320 includes a base 321 shaped as a cuboidal plate, an insert 322 shaped as a cylinder projecting downwardly in FIG. 10 from the base 321, and the joint 323 shaped as a hollow cylinder projecting downwardly in FIG. 10 from an outer circumferential portion of the insert 322. As illustrated in FIG. 3, the negative electrode terminal 320 includes an annular sealing portion 324 on the boundary between the base 321 and the inside of the insert 322. The base 321 is disposed on a base 621 of a negative electrode gasket 620. As illustrated in FIG. 3, the insert 322 is inserted in the negative electrode gasket 620. As illustrated in FIG. 3, the joint 323 protrudes downwardly in FIG. 3 from the insertion hole 221a in the base 221 of the negative electrode current collection plate 220. The protruding portion of the joint 323 is spread radially outwardly and joined to the base 221. The joint 323 is crimped on the base 221. Moreover, the joint 323 is welded to the base 221. The sealing portion 324 represents a protruding portion protruding toward the negative electrode gasket 620. As illustrated in FIG. 3, the sealing portion 324 of the negative electrode terminal 320 cooperates with the lid 420 in compressing part of the base 621 of the negative electrode gasket 620 along the heightwise direction Z, thereby sealing the negative electrode terminal 320 and the lid 420 with the negative electrode gasket 620. The negative electrode terminal 320 is made of copper or copper alloy, for example.

The outer casing 400 houses the components of the battery 1 therein or the components of the battery 1 are mounted in the outer casing 400. The outer casing 400 illustrated in FIGS. 1 through 4 and 7 through 11 includes a receptacle 410, the lid 420, the rupture valve 430, and the sealing plug 440.

The receptacle 410 houses the charge/discharge body 100 and others therein. The receptacle 410 is a housing body. The receptacle 410 is constructed as a metal can having a cuboidal shape. The receptacle 410 includes an opening 410a that is open along the longitudinal direction and a housing portion 410b contiguous to the opening 410a. The receptacle 410 is made of aluminum or aluminum alloy, for example.

### (Lid 420 according to the embodiment)

The lid 420 cooperates with the receptacle 410 in housing the charge/discharge body 100 therein. The lid 420 is a housing body. The lid 420 seals the opening 410a of the receptacle 410. The receptacle 410 is formed by a metal plate having an elongate shape. As illustrated in FIG. 7, the lid 420 has a positive electrode insertion hole 420a formed as a circular through hole in one end in the longitudinal direction X. The insert 312 of the positive electrode terminal 310 and an insert 612 of the positive electrode gasket 610 are inserted in the positive electrode insertion hole 420a. As illustrated in FIG. 10, the lid 420 has a negative electrode insertion hole 420b formed as a circular through hole in the other end in the longitudinal direction X. The insert 322 of the negative electrode terminal 320 and the insert 622 of the negative electrode gasket 620 are inserted in the negative electrode insertion hole 420b. As illustrated in FIG. 8, the lid 420 includes a liquid introduction hole 420c defined therein between the positive electrode insertion hole 420a and the negative electrode insertion hole 420b for introducing the electrolyte 140. The lid 420 is welded to the receptacle 410. The lid 420 is made of aluminum or aluminum alloy, for example.

As illustrated in FIG. 11, the sealing plug 440 is inserted in the liquid introduction hole 420c in the lid 420. As illustrated in FIGS. 8, 9, and 11, the liquid introduction hole 420c includes a first penetrating portion 420P and a second penetrating portion 420Q.

As illustrated in FIGS. 8, 9, and 11, the first penetrating portion 420P penetrates the lid 420 along the stacked direction V along which the sealing plug 440 and the lid 420 are stacked and faces the outside of the lid 420. The outside of the lid 420 is a side away from the charge/discharge body 100. As illustrated in FIG. 9, the first penetrating portion 420P includes an outer surface 421, an end 422, a first inner circumferential surface 423, an end 424, and a confronting surface 425. The outer surface 421, the end 422, the first inner circumferential surface 423, the end 424, and the confronting surface 425 are contiguously arranged in the order named, making up an outer shape of the first penetrating portion 420P.

As illustrated in FIG. 9, the outer surface 421 of the first penetrating portion 420P is positioned on the outside of the battery 1. As illustrated in FIG. 9, the end 422 represents the boundary between the outer surface 421 and the first inner circumferential surface 423. The end 422 is of a circular shape, for example. As illustrated in FIGS. 9 and 11, the first inner circumferential surface 423 is disposed transversely adjacent to the outer surface 421 and formed along the stacked direction V. The first inner circumferential surface 423 extends perpendicularly to the outer surface 421, for example. The first inner circumferential surface 423 is positioned on the inside of the lid 420 away from the outer surface 421. The inside of the lid 420 is a side closer to an inner surface 429 of the lid 420 and corresponds to the inside of the battery 1. The first inner circumferential surface 423 is of an annular shape as viewed from the stacked direction V, for example. As illustrated in FIGS. 9 and 11, the end 424 represents the boundary between the first inner circumferential surface 423 and the confronting surface 425. The end 424 is positioned at a lower end of the first inner circumferential surface 423 and at an outer edge of the confronting surface 425. The end 424 is of a circular shape, for example.

As illustrated in FIGS. 9 and 11, the confronting surface 425 of the first penetrating portion 420P is disposed transversely adjacent to the first inner circumferential surface 423 and faces the stacked direction V. The confronting surface 425 extends perpendicularly to the first inner circumferential surface 423, for example. The confronting surface 425 is of an annular shape, for example. That is, the confronting surface 425 includes an outer edge and an inner edge. The outer edge of the confronting surface 425 represents the end 424. The inner edge of the confronting surface 425 represents a second end 426 of the second penetrating portion 420Q.

As illustrated in FIGS. 8, 9, and 11, the second penetrating portion 420Q penetrates the lid 420 along the stacked direction V along which the sealing plug 440 and the lid 420 are stacked and faces the inside of the lid 420. The inside of the lid 420 is a side close to the charge/discharge body 100. The second penetrating portion 420Q is contiguous to the first penetrating portion 420P along the stacked direction V. The central axis of the second penetrating portion 420Q is aligned with the central axis of the first penetrating portion 420P. The second penetrating portion 420Q is integrally formed with the first penetrating portion 420P. The opening of the second penetrating portion 420Q is smaller than the opening of the first penetrating portion 420P. The opening is an opening in a plane defined by the transverse direction Y and the longitudinal direction X. The second penetrating portion 420Q includes a second end 426, a second inner circumferential surface 427, an end 428, and an inner surface 429. The second end 426, the second inner circumferential surface 427, the end 428, and the inner surface 429 are contiguously arranged in the order named, making up an outer shape of the second penetrating portion 420A. The second end 426 is contiguous to the confronting surface 425 of the first penetrating portion 420P.

As illustrated in FIGS. 9 and 11, the second end 426 of the second penetrating portion 420Q represents the boundary between the confronting surface 425 and the second inner circumferential surface 427. The second end 426 is of a circular shape, for example. As illustrated in FIGS. 9 and 11, the second inner circumferential surface 427 is disposed transversely adjacent to the confronting surface 425 and formed along the stacked direction V. The second inner circumferential surface 427 extends perpendicularly to the confronting surface 425, for example. The second inner circumferential surface 427 is positioned on the inside of the lid 420 relative to the first inner circumferential surface 423. The second inner circumferential surface 427 is of an annular shape as viewed from the stacked direction V, for example. The central axis of the second inner circumferential surface 427 is aligned with the central axis of the first inner circumferential surface 423. As illustrated in FIG. 9, the end 428 represents the boundary between the second inner circumferential surface 427 and the inner surface 429. The end 428 is positioned at a lower end of the second inner circumferential surface 427. The end 428 is of a circular shape, for example. As illustrated in FIG. 9, the inner surface 429 is positioned on the inside of the battery 1.

As illustrated in FIG. 8, the rupture valve 430 is disposed in the lid 420. When the internal pressure of the battery 1 reaches a predetermined value, the rupture valve 430 bursts outwardly, bringing the internal pressure of the battery 1 to the atmospheric pressure. The rupture valve 430 is of an elliptical shape, for example. The rupture valve 430 is smaller in thickness than the lid 420. The rupture valve 430 has grooves that are formed therein and from which the rupture valve 430 breaks apart. The rupture valve 430 is integrally formed with the lid 420. The rupture valve 430 may instead be formed separately from the lid 420 and then welded annularly to the edge of a through hole provided in the lid 420.

### (Sealing plug 440 according to the embodiment)

The sealing plug 440 is inserted in the liquid introduction hole 420c in the lid 420 illustrated in FIG. 8. As illustrated in FIG. 1, the sealing plug 440 is stacked on and joined to the lid 420. As illustrated in FIGS. 8, 9, and 11, the sealing plug 440 includes a first insert 440P and a second insert 440Q. The first insert 440P of the sealing plug 440 is welded to the lid 420. The sealing plug 440 is made of aluminum or aluminum alloy, for example.

As illustrated in FIGS. 8, 9, and 11, the first insert 440P is inserted in the first penetrating portion 420P along the stacked direction V. As illustrated in FIG. 9, the first insert 440P includes an outer surface 441, an end 442, a first outer circumferential surface 443, an end 444, and a confronted surface 445. The outer surface 441, the end 442, the first outer circumferential surface 443, the end 444, and the confronted surface 445 are contiguously arranged in the order named, making up an outer shape of the first insert 440P.

As illustrated in FIG. 9, the outer surface 441 of the first insert 440P is positioned on the outside of the battery 1. The outer surface 441 is of a circular shape, for example. The outer surface 441 is positioned on the outside of the battery 1 relative to the outer surface 421 of the lid 420 in the stacked direction V. The outer surface 441 may be positioned adjacent to the outer surface 421 of the lid 420 in the stacked direction V. The outer surface 441 may be positioned on the inside of the battery 1 relative to the outer surface 421 of the lid 420 in the stacked direction V.

The end 442 of the first insert 440P represents the boundary between the outer surface 441 and the first outer circumferential surface 443. The end 442 is positioned at an outer edge of the outer surface 441. The end 442 is of a circular shape, for example. As illustrated in FIGS. 9 and 11, the first outer circumferential surface 443 is disposed transversely adjacent to the outer surface 441 and formed along the stacked direction V. The first outer circumferential surface 443 extends perpendicularly to the outer surface 441, for example. The first outer circumferential surface 443 is positioned on the inside of the lid 420 relative to the outer surface 441. The first outer circumferential surface 443 is of an annular shape as viewed from the stacked direction V, for example. The first outer circumferential surface 443 faces the first inner circumferential surface 423 of the lid 420 along directions across the stacked direction V. The directions across the stacked direction V are the transverse direction Y and the longitudinal direction X. As illustrated in FIGS. 9 and 11, the end 444 represents the boundary between the first outer circumferential surface 443 and the confronted surface 445. The end 444 is positioned at a lower end of the first outer circumferential surface 443 and at an outer edge of the confronted surface 445. The end 444 is of a circular shape, for example. The end 444 faces the end 424 of the lid 420 along the directions across the stacked direction V.

As illustrated in FIG. 9 and 11, the confronted surface 445 of the first insert 440P is disposed transversely adjacent to the first outer circumferential surface 443 and faces the stacked direction V. The confronted surface 445 confronts the confronting surface 425 of the lid 420. The confronted surface 445 extends perpendicularly to the first outer circumferential surface 443, for example. The confronted surface 445 is of an annular shape, for example. That is, the confronted surface 445 includes an outer edge and an inner edge. The outer edge of the confronted surface 445 represents the end 444. The inner edge of the confronted surface 445 represents a first end 446 of the second insert 440Q. The confronted surface 445 is held in partial surface contact with the confronting surface 425 of the lid 420 in a region from the first inner circumferential surface 423 of the lid 420 to a second outer circumferential surface 447 of the sealing plug 440 along the directions across the stacked direction V. The confronted surface 445 is held in surface contact with the confronting surface 425 of the lid 420 except in the vicinity of the first inner circumferential surface 423 of the lid 420 and in the vicinity of the second outer circumferential surface 447 of the sealing plug 440.

As illustrated in FIGS. 8, 9, and 11, the second insert 440Q is inserted in the second penetrating portion 420Q along the stacked direction V. The second insert 440Q is contiguous to the first insert 440P along the stacked direction V. The central axis of the second insert 440Q is aligned with the central axis of the first insert 440P. The second insert 440Q is smaller than the first insert 440P in area facing the stacked direction V. The area is an area in the plane defined by the transverse direction Y and the longitudinal direction X. The second insert 440Q includes the first end 446, the second outer circumferential surface 447, an end 448, and an inner surface 449. The first end 446, the second outer circumferential surface 447, the end 448, and the inner surface 449 are contiguously arranged in the order named, making up an outer shape of the second insert 440Q. The first end 446 is contiguous to the confronted surface 445 of the first insert 440P.

As illustrated in FIGS. 9 and 11, the first end 446 of the second insert 440Q represents the boundary between the confronted surface 445 and the second outer circumferential surface 447. The first end 446 is of a circular shape, for example. As illustrated in FIGS. 9 and 11, the second outer circumferential surface 447 is disposed transversely adjacent to the confronted surface 445 and formed along the stacked direction V. The second outer circumferential surface 447 faces the second inner circumferential surface 427 of the lid 420. The second outer circumferential surface 447 extends perpendicularly to the confronted surface 445, for example. The second outer circumferential surface 447 is positioned on the inside of the lid 420 relative to the first outer circumferential surface 443. The second outer circumferential surface 447 is of an annular shape as viewed from the stacked direction V, for example. The central axis of the second outer circumferential surface 447 is aligned with the central axis of the first outer circumferential surface 443. As illustrated in FIG. 9, the end 448 represents the boundary between the second outer circumferential surface 447 and the inner surface 449. The end 448 is positioned at a lower end of the second outer circumferential surface 447. The end 448 is of a circular shape, for example. As illustrated in FIG. 9, the inner surface 449 is positioned on the inside of the battery 1. The inner surface 449 is of a circular shape, for example.

As illustrated in FIGS. 9 and 11, the first end 446 of the sealing plug 440 is of a circular shape. The second end 426 of the lid 420 is larger than the first end 446 in circular shape. Hence, the first end 446 of the sealing plug 440 is spaced at least partly from the second end 426 of the lid 420. According to the embodiment, the first end 446 is spaced from the second end 426 along their full circumference. The second outer circumferential surface 447 of the sealing plug 440 is spaced from the second inner circumferential surface 427 of the lid 420 along their full circumference. The full circumference refers to an annular shape over 360 degrees in the plane defined by the longitudinal direction X and the transverse direction Y of the battery 1, as illustrated in FIGS. 8 and 9.

With regard to a clearance S1 between the second inner circumferential surface 427 of the lid 420 and the second outer circumferential surface 447 of the sealing plug 440, the distance between the second inner circumferential surface 427 and the second outer circumferential surface 447 along radial directions of the liquid introduction hole 420c is represented by a length L1. The radial directions represent radial directions from the center at the central axes of the first penetrating portion 420P and the second penetrating portion 420Q. For example, as illustrated in FIG. 9, in a cross section along a plane perpendicular to the transverse direction Y and across the central axis of the liquid introduction hole 420c, the distance across the clearance S1 along the longitudinal direction X is represented by the length L1. The length L1 is in the range of several hundreds µm to several mm. For example, the length L1 is 1 mm.

With regard to a clearance S2 between the first inner circumferential surface 423 of the lid 420 and the first outer circumferential surface 443 of the sealing plug 440, the distance between the first inner circumferential surface 423 and the first outer circumferential surface 443 along the radial directions of the liquid introduction hole 420c is represented by a length L2. For example, as illustrated in FIG. 9, in a cross section along a plane perpendicular to the transverse direction Y and across the central axis of the liquid introduction hole 420c, the distance across the clearance S2 along the longitudinal direction X is represented by the length L2. The length L2 is in the range of several µm to several hundreds µm. For example, the length L1 is 10 µm. The length L2 is set to a value in the range of several µm to several hundreds µm in order to perform laser welding on the first inner circumferential surface 423 of the lid 420 and the first outer circumferential surface 443 of the sealing plug 440.

The lid 420 and the sealing plug 440 are shaped such that the length L1 of the clearance S1 is larger at least partly than the length L2 of the clearance S2. According to the present embodiment, the length L1 of the clearance S1 is larger than the length L2 of the clearance S2 along the full circumference of the sealing plug 440. A minimum value of the length L1 of the clearance S1 is larger than a maximum value of the length L2 of the clearance S2. As illustrated in a left side of FIG. 12, in any cross section of the sealing plug 440 and the lid 420 parallel to the stacked direction V including the central axis of the liquid introduction hole 420c in the lid 420, the length L1 of the clearance S1 at an end side of the sealing plug 440 is larger than the length L2 of the clearance S2 at the end side of the sealing plug 440 between the first outer circumferential surface 443 and the first inner circumferential surface 423 of the lid 420. As illustrated in a right side of FIG. 12, the length L1 of the clearance S1 at the other end side of the sealing plug 440 is larger than the length L2 of the clearance S2 at the other end side of the sealing plug 440 between the first outer circumferential surface 443 and the first inner circumferential surface 423 of the lid 420.

The second insert 440Q of the sealing plug 440 and the second penetrating portion 420Q of the lid 420 are not attached to each other by press-fitting. The first insert 440P of the sealing plug 440 and the first penetrating portion 420P of the lid 420 are not attached to each other by press-fitting. In other words, the sealing plug 440 and the lid 420 are not attached to each other by press-fitting. After the sealing plug 440 is attached to the lid 420, the sealing plug 440 is not enlarged in diameter in the directions across the stacked direction V and joined to the lid 420. After the sealing plug 440 is attached to the lid 420, the sealing plug 440 is not pressed in the stacked direction V with respect to the lid 420 and joined to the lid 420. Stated otherwise, the sealing plug 440 is attached to the lid 420 without being plastically deformed. The sealing plug 440 and the lid 420 do not have portions plastically deformed for being secured to each other. According to the embodiment, when the sealing plug 440 and the lid 420 are attached to each other, the sealing plug 440 and the lid 420 may be brought into contact with each other, possibly causing at least one of the sealing plug 440 and the lid 420 to be plastically deformed.

The insulator 500 insulates the components of the battery 1 and the outer casing 400 from each other. The insulator 500 illustrated in FIGS. 2 through 4, 7, and 10 includes an insulation cover 510, a positive electrode insulation plate 520, and a negative electrode insulation plate 530.

The insulation cover 510 covers the charge/discharge body 100 illustrated in FIG. 4. The insulation cover 510 exposes an upper portion in FIG. 4 of the charge/discharge body 100 outwardly. The insulation cover 510 covers a portion of the charge/discharge body 100, except the upper portion in FIG. 4 of the charge/discharge body 100. The insulation cover 510 is in the shape of a pentahedron folded as a box shape, for example. The insulation cover 510 is made of polypropylene, for example.

As illustrated in FIG. 2, the positive electrode insulation plate 520 insulates the positive electrode current collection plate 210 and the lid 420 from each other. As illustrated in FIGS. 2 and 7, the positive electrode insulation plate 520 includes a base 521 shaped as a cuboidal plate and an edge 522 annularly surrounding the base 521 and protruding in a direction away from the lid 420. The base 211 of the positive electrode current collection plate 210 is housed in a space defined by the base 521 and the edge 522 of the positive electrode insulation plate 520. The base 521 has a through hole 521a formed therein. The insert 612 of the positive electrode gasket 610 is inserted in the through hole 521a in the base 521. The positive electrode insulation plate 520 is made of insulative resin, for example.

As illustrated in FIG. 3, the negative electrode insulation plate 530 insulates the negative electrode current collection plate 220 and the lid 420 from each other. As illustrated in FIGS. 3 and 10, the negative electrode insulation plate 530 includes a base 531 shaped as a cuboidal plate and an edge 532 annularly surrounding the base 531 and protruding in a direction away from the lid 420. The base 221 of the negative electrode current collection plate 220 is housed in a space defined by the base 531 and the edge 532 of the negative electrode insulation plate 530. The base 531 has a through hole 531a formed therein. The insert 622 of the negative electrode gasket 620 is inserted in the through hole 531a in the base 531. The negative electrode insulation plate 530 is made of insulative resin, for example.

The sealing body 600 seals the components of the battery 1 and the outer casing 400. The sealing body 600 illustrated in FIGS. 1 through 4, 7, and 10 includes the positive electrode gasket 610 and the negative electrode gasket 620.

The positive electrode gasket 610 seals the positive electrode terminal 310 and the lid 420 by being compressed by the positive electrode terminal 310 and the lid 420. As illustrated in FIG. 7, the positive electrode gasket 610 includes the base 611 shaped as a cuboidal plate and a hollow cylindrical insert 612 protruding into the battery 1 from a central portion of the base 611. The positive electrode gasket 610 also includes an edge 613 annularly surrounding the base 611 and protruding outwardly from the battery 1. The base 611 has a through hole formed therein. The base 311 of the positive electrode terminal 310 is housed in a space defined by the base 611 and the edge 613 of the positive electrode gasket 610. As illustrated in FIG. 2, the insert 612 is inserted in the positive electrode insertion hole 420a in the lid 420. As illustrated in FIG. 2, the insert 312 of the positive electrode terminal 310 is inserted in the through hole in the base 611 and an inner circumferential surface of the insert 612. The positive electrode gasket 610 is made of insulative resin that is insulative and elastic, for example.

The negative electrode gasket 620 seals the negative electrode terminal 320 and the lid 420 by being compressed by the negative electrode terminal 320 and the lid 420. The negative electrode gasket 620 is similar in outer shape to the positive electrode gasket 610. As illustrated in FIG. 10, the negative electrode gasket 620 includes the base 621 shaped as a cuboidal plate and a hollow cylindrical insert 622 protruding into the battery 1 from a central portion of the base 621. The negative electrode gasket 620 also includes an edge 623 annularly surrounding the base 621 and protruding outwardly from the battery 1. The base 621 has a through hole formed therein. The base 321 of the negative electrode terminal 320 is housed in a space defined by the base 621 and the edge 623 of the negative electrode gasket 620. As illustrated in FIG. 3, the insert 622 is inserted in the negative electrode insertion hole 420b in the lid 420. As illustrated in FIG. 3, the insert 322 of the negative electrode terminal 320 is inserted in the through hole in the base 621 and an inner circumferential surface of the insert 622. The negative electrode gasket 620 is made of insulative resin that is insulative and elastic, for example.

### (Method of manufacturing the battery 1 according to the embodiment)

The method of manufacturing the battery 1 according to the embodiment is characterized only in the manner in which the sealing plug 440 and the lid 420 are attached and joined to each other. Consequently, only the manner in which the sealing plug 440 and the lid 420 are attached and joined to each other in the method of manufacturing the battery 1 according to the embodiment will be described below with reference to FIGS. 11 and 12. FIG. 12 is an end view illustrating the manner in which the sealing plug 440 and the lid 420 are attached and joined to each other in the method of manufacturing the battery 1 according to the embodiment.

The method of manufacturing the battery 1 according to the embodiment has a first step and a second step. In the first step, while the confronting surface 425 of the lid 420 and the confronted surface 445 of the sealing plug 440 are facing each other in the stacked direction V, the lid 420 and the sealing plug 440 are brought closer to each other along the stacked direction V until the lid 420 and the sealing plug 440 are attached to each other. In the second step, the lid 420 and the sealing plug 440 are welded to each other after the first step.

For attaching the sealing plug 440 and the lid 420 to each other in the first step, the sealing plug 440 and the lid 420 are moved relatively toward each other, the sealing plug 440 is moved closer to the lid 420, or the lid 420 is moved closer to the sealing plug 440. According to the embodiment, for example, a configuration of moving the sealing plug 440 closer to the lid 420 to attach the sealing plug 440 to the lid 420 will be described below.

In the sealing plug 440, the surface area of the first insert 440P in the longitudinal direction X and the transverse direction Y across the stacked direction V is larger than the surface area of the second insert 440Q. In the lid 420, the opening area of the first penetrating portion 420P in the longitudinal direction X and the transverse direction Y across the stacked direction V is larger than the opening area of the second penetrating portion 420Q. Therefore, when attaching the sealing plug 440 and the lid 420 to each other in the first step, the second insert 440Q of the sealing plug 440 is brought closer to the first penetrating portion 420P of the lid 420 along the stacked direction V in such a manner to prevent the sealing plug 440 and the lid 420 from interfering with each other.

While the confronted surface 445 of the sealing plug 440 and the confronting surface 425 of the lid 420 are facing each other in the stacked direction V, the sealing plug 440 is brought closer to the lid 420. The sealing plug 440 indicated by the broken lines in FIG. 12 is in a state prior to being attached to the lid 420. It is assumed here that, as indicated by the broken lines in FIG. 12, the sealing plug 440 prior to being attached to the lid 420 is tilted with respect to the lid 420. The sealing plug 440 indicated by the solid lines in FIG. 12 is in a state after being attached to the lid 420. When the sealing plug 440 moves closer to the lid 420, the second insert 440Q of the sealing plug 440 is first inserted into the first penetrating portion 420P of the lid 420 and then inserted into the second penetrating portion 420Q of the lid 420.

Providing the sealing plug 440 and the lid 420 are relatively tilted with respect to the directions across the stacked direction V when attaching the sealing plug 440 to the lid 420, the second insert 440Q is more likely to interfere with the lid 420 than the first insert 440P. The reason for this is that, providing the sealing plug 440 and the lid 420 are relatively tilted, a positional deviation with respect to the directions across the stacked direction V is proportional to a distance along the stacked direction V. As a result, the larger the entire length of the sealing plug 440 that is inserted into the lid 420 is, the easier for the sealing plug 440 to interfere with the lid 420 becomes. Specifically, as illustrated in FIGS. 11 and 12, when attaching the sealing plug 440 to the lid 420, the first insert 440P of the sealing plug 440 needs to be prevented from interfering with the lid 420 within the range of a first length t1. The first length t1 is a length along the stacked direction V of the first penetrating portion 420P of the lid 420. Meanwhile, as illustrated in FIGS. 11 and 12, when attaching the sealing plug 440 to the lid 420, the second insert 440Q of the sealing plug 440 needs to be prevented from interfering with the lid 420 within the range of a second length t2. The second length t2 is a length along the stacked direction V of the first penetrating portion 420P of the lid 420 and the second penetrating portion 420Q of the lid 420. The second length t2 is larger than the first length t1 by the length of the second penetrating portion 420Q along the stacked direction V. Consequently, the second insert 440Q of the sealing plug 440 is more likely to interfere with the lid 420 than the first insert 440P.

With the battery 1 according to the embodiment, as illustrated in FIG. 12, the length L1 of the clearance S1 between the second inner circumferential surface 427 of the lid 420 and the second outer circumferential surface 447 of the sealing plug 440 is larger than the length L2 of the clearance S2 between the first inner circumferential surface 423 of the lid 420 and the first outer circumferential surface 443 of the sealing plug 440. In other words, with the battery 1 according to the embodiment, in the sealing plug 440, the second insert 440Q whose length (the second length t2) inserted into the lid 420 is relatively large is spaced a larger clearance from the lid 420 than the first insert 440P whose length (the first length t1) inserted into the lid 420 is relatively small. Hence, the second insert 440Q of the sealing plug 440 is spaced a larger clearance from the lid 420 than the first insert 440P and has a relatively large margin for a positioning error such as tilting. Consequently, even if the sealing plug 440 and the lid 420 are tilted relatively to each other at the time of attaching the sealing plug 440 and the lid 420 to each other, the sealing plug 440 and the lid 420 are prevented from interfering with each other. As a result, with the battery 1 according to the embodiment, the sealing plug 440 and the lid 420 can sufficiently be attached to each other.

According to the embodiment, as illustrated in FIG. 12, the first length t1 is larger than the second length t2. It is assumed that, unlike the structure according to the embodiment, the length L1 illustrated in FIG. 12 is set to a length L3 illustrated in FIG. 12. The length L3 corresponds to the length L2. Setting the length L1 to the length L3 (L2) means that the clearance between the first insert 440P of the sealing plug 440 and the first penetrating portion 420P of the lid 420 and the clearance between the second insert 440Q of the sealing plug 440 and the second penetrating portion 420Q of the lid 420 are the same as each other. In this case, the second inner circumferential surface 427 of the second penetrating portion 420Q of the lid 420 is represented by a second inner circumferential surface 427' indicated by the two-dot-and-dash lines. In FIG. 12, the sealing plug 440 indicated by the broken lines is in a state tilted with respect to the lid 420 and being attached to the lid 420. According to the structure different from the embodiment, an end 448' of the second insert 440Q of the sealing plug 440 indicated by the broken lines interferes with the second inner circumferential surface 427' indicated by the two-dot-and-dash lines.

In the second step, the sealing plug 440 and the lid 420 are welded to each other. According to the embodiment, the sealing plug 440 and the lid 420 are laser-welded, for example. As illustrated in FIG. 12, a welding bead W1 is formed at the first outer circumferential surface 443 of the sealing plug 440 and the end 422 of the lid 420. The welding bead W1 is of an annular shape along the end 422 of the lid 420.

### (Advantages of the battery 1 and the method of manufacturing the battery 1 according to the embodiment)

Advantages of the battery 1 and the method of manufacturing the battery 1 according to the embodiment will be described below with reference to FIGS. 9, 11, and 12.

(1) As illustrated in FIG. 11, the length L1 of the clearance S1 between the second inner circumferential surface 427 of the lid 420 and the second outer circumferential surface 447 of the sealing plug 440 is larger at least partly than the length L2 of the clearance S2 between the first inner circumferential surface 423 of the lid 420 and the first outer circumferential surface 443 of the sealing plug 440.

(18) As illustrated in FIG. 12, the method of manufacturing the battery 1 according to the embodiment has the first step and the second step. In the first step, while the confronting surface 425 of the lid 420 and the confronted surface 445 of the sealing plug 440 are facing each other in the stacked direction V, the lid 420 and the sealing plug 440 are brought closer to each other along the stacked direction V until the lid 420 and the sealing plug 440 are attached to each other. In the second step, the lid 420 and the sealing plug 440 are welded to each other after the first step.

With such an arrangement, in the sealing plug 440, the second insert 440Q whose length (the second length t2) inserted into the lid 420 is relatively large is spaced a larger clearance from the lid 420 than the first insert 440P whose length (the first length t1) inserted into the lid 420 is relatively small, along the directions across the stacked direction V with respect to the lid 420. Hence, the second insert 440Q of the sealing plug 440 is spaced a larger clearance from the lid 420 than the first insert 440P along the directions across the stacked direction V. In other words, the second insert 440Q of the sealing plug 440 has a larger margin for a positioning error such as tilting than the first insert 440P in the directions across the stacked direction V. The positioning error of the sealing plug 440 occurs due to tilting of the sealing plug 440 from the stacked direction V. Consequently, even if the sealing plug 440 and the lid 420 are tilted relatively to each other at the time of attaching the sealing plug 440 and the lid 420 to each other, the sealing plug 440 and the lid 420 are prevented from interfering with each other. As a result, the sealing plug 440 and the lid 420 can sufficiently be attached and joined to each other.

More specifically, with the battery 1 according to the embodiment, when attaching the sealing plug 440 to the lid 420, the sealing plug 440 can smoothly be inserted into the lid 420. Therefore, the sealing plug 440 is prevented from being attached to the lid 420 while being partly lifted from the lid 420. In other words, the sealing plug 440 is prevented from being attached to the lid 420 while being tilted with respect to the lid 420. Moreover, the sealing plug 440 is prevented from being attached to the lid 420 while being wholly lifted from the lid 420. Further, the sealing plug 440 is prevented from being attached to the lid 420 while being distorted or flexed with respect to the lid 420. As a result, the sealing plug 440 and the lid 420 can sufficiently be joined to each other by welding, for example.

The second insert 440Q of the sealing plug 440 is spaced from the liquid introduction hole 420c in the lid 420 by a larger clearance than the first insert 440P in the directions across the stacked direction V. Hence, the likelihood of a dimensional tolerance for the part of the second insert 440Q can be increased. In other words, the sealing plug 440 is able to ease a dimensional tolerance for the part of the second insert 440Q. Moreover, the dimensional tolerance for the part of the liquid introduction hole 420c in the lid 420 that is disposed adjacent to the second insert 440Q of the sealing plug 440 along the directions across the stacked direction V can be eased.

Further, since the second insert 440Q of the sealing plug 440 is spaced from the liquid introduction hole 420c in the lid 420 by a larger clearance than the first insert 440P in the directions across the stacked direction V, the part of the second insert 440Q can be reduced in size and weight.

Further, since the second insert 440Q of the sealing plug 440 is spaced from the liquid introduction hole 420c in the lid 420 by a larger clearance than the first insert 440P in the directions across the stacked direction V, the likelihood of a dimensional tolerance for the concentricity of the first insert 440P and the second insert 440Q can be increased. In other words, the sealing plug 440 is able to ease a dimensional tolerance for the part of the second insert 440Q. Moreover, the dimensional tolerance for the part of the liquid introduction hole 420c in the lid 420 that is disposed adjacent to the second insert 440Q of the sealing plug 440 along the directions across the stacked direction V can be eased.

(2) As illustrated in FIG. 11, the length L1 of the clearance S1 between the second inner circumferential surface 427 of the lid 420 and the second outer circumferential surface 447 of the sealing plug 440 is larger than the length L2 of the clearance S2 between the first inner circumferential surface 423 of the lid 420 and the first outer circumferential surface 443 of the sealing plug 440. This structure corresponds to a structure in which the length L1 is larger than the length L2 by a certain amount or more. In other words, even if the sealing plug 440 is shifted off-center a maximum distance with respect to the lid 420 in the directions across the stacked direction V and the first outer circumferential surface 443 of the sealing plug 440 is caused to contact the first inner circumferential surface 423 of the lid 420, the second outer circumferential surface 447 of the sealing plug 440 does not contact the second inner circumferential surface 427 of the lid 420. With this structure, the sealing plug 440 and the lid 420 are sufficiently prevented from interfering with each other, and the sealing plug 440 can sufficiently be attached to the lid 420.

(3) As illustrated in FIG. 11, the first end 446 that is positioned at the boundary between the confronted surface 445 and the second outer circumferential surface 447 of the sealing plug 440 is spaced at least partly from the second end 426 that is positioned at the boundary between the confronting surface 425 and the second inner circumferential surface 427 of the lid 420. This structure corresponds to a structure in which the length L1 of the clearance S1 between the second inner circumferential surface 427 of the lid 420 and the second outer circumferential surface 447 of the sealing plug 440 is larger at least partly than the length L2 of the clearance S2 between the first inner circumferential surface 423 of the lid 420 and the first outer circumferential surface 443 of the sealing plug 440. This structure prevents the end 448 of the sealing plug 440 from interfering with the second inner circumferential surface 427 of the lid 420 and also prevents the sealing plug 440 from being attached in a tilted fashion with respect to the lid 420.

As illustrated in FIG. 11, the first end 446 is spaced from the second end 426. This structure corresponds to a structure in which the length L1 is larger than the length L2 by a certain amount or more. In other words, even if the sealing plug 440 is shifted off-center a maximum distance with respect to the lid 420 in the directions across the stacked direction V and the first outer circumferential surface 443 of the sealing plug 440 is caused to contact the first inner circumferential surface 423 of the lid 420, the second outer circumferential surface 447 of the sealing plug 440 does not contact the second inner circumferential surface 427 of the lid 420. With this structure, the sealing plug 440 and the lid 420 are sufficiently prevented from interfering with each other, and the sealing plug 440 can sufficiently be attached to the lid 420.

(5) As illustrated in FIG. 11, the confronted surface 445 of the sealing plug 440 is held in partial surface contact with the confronting surface 425 of the lid 420 in the region from the first inner circumferential surface 423 of the lid 420 to the second outer circumferential surface 447 of the sealing plug 440 along the directions across the stacked direction V. With this arrangement, the sealing plug 440 and the lid 420 can be joined to each other while the sealing plug 440 and the lid 420 are being sufficiently positioned.

(6) As illustrated in FIG. 11, the second insert 440Q of the sealing plug 440 and the second penetrating portion 420Q of the lid 420 are not attached to each other by press-fitting. With this structure, the sealing plug 440 is sufficiently prevented from being attached to the lid 420 while being distorted or flexed with respect to the lid 420. As a result, the sealing plug 440 and the lid 420 can sufficiently be joined to each other by welding, for example. With this structure, moreover, there is no need for an apparatus for press-fitting in the manufacture of the battery 1.

(7) As illustrated in FIG. 11, the sealing plug 440 and the lid 420 are not attached to each other by press-fitting. Specifically, the second insert 440Q of the sealing plug 440 and the second penetrating portion 420Q of the lid 420 are not attached to each other by press-fitting. Moreover, the first insert 440P of the sealing plug 440 and the first penetrating portion 420P of the lid 420 are not attached to each other by press-fitting. With this structure, it is possible to sufficiently prevent the sealing plug 440 from being attached to the lid 420 while being distorted or flexed with respect to the lid 420. As a result, the sealing plug 440 and the lid 420 can sufficiently be joined to each other by welding, for example. With this structure, moreover, there is no need for an apparatus for press-fitting in the manufacture of the battery 1.

(15) As illustrated in FIGS. 9 and 12, the minimum value of the length L1 of the clearance S1 between the second inner circumferential surface 427 of the lid 420 and the second outer circumferential surface 447 of the sealing plug 440 is larger than the maximum value of the length L2 of the clearance S2 between the first inner circumferential surface 423 of the lid 420 and the first outer circumferential surface 443 of the sealing plug 440. This structure is able to further sufficiently prevent the sealing plug 440 from being attached to the lid 420 while being distorted or flexed with respect to the lid 420. As a result, the sealing plug 440 and the lid 420 can sufficiently be joined to each other by welding, for example. With this structure, moreover, there is no need for an apparatus for press-fitting in the manufacture of the battery 1.

(16) As illustrated in FIG. 12, in any cross section of the sealing plug 440 and the lid 420 parallel to the stacked direction V including the central axis of the liquid introduction hole 420c in the lid 420, the length L1 of the clearance S1 between the second outer circumferential surface 447 of the sealing plug 440 and the second inner circumferential surface 427 of the lid 420 at the end side of the sealing plug 440 is larger than the length L2 of the clearance S2 between the first outer circumferential surface 443 at the end side of the sealing plug 440 and the first inner circumferential surface 423 of the lid 420. The end side is a left side of the longitudinal direction X of the battery 1 in FIG. 12, for example. The length L1 of the clearance S1 between the second outer circumferential surface 447 at the other end side of the sealing plug 440 and the second inner circumferential surface 427 of the lid 420 is larger than the length L2 of the clearance S2 between the first outer circumferential surface 443 at the other end side of the sealing plug 440 and the first inner circumferential surface 423 of the lid 420. The other end side is a right side of the longitudinal direction X of the battery 1 in FIG. 12, for example. In other words, the other end side is a side spaced 180° from the end side along the central axis of the liquid introduction hole 420c in the lid 420. The end side may be an end side of the transverse direction Y of the battery 1, and the other end side may be the other end side of the transverse direction Y of the battery 1. This structure is able to further sufficiently prevent the sealing plug 440 from being attached to the lid 420 while being distorted or flexed with respect to the lid 420. As a result, the sealing plug 440 and the lid 420 can sufficiently be joined to each other by welding, for example. With this structure, moreover, there is no need for an apparatus for press-fitting in the manufacture of the battery 1.

### (Sealing plug 710 according to a modification 1 of the embodiment)

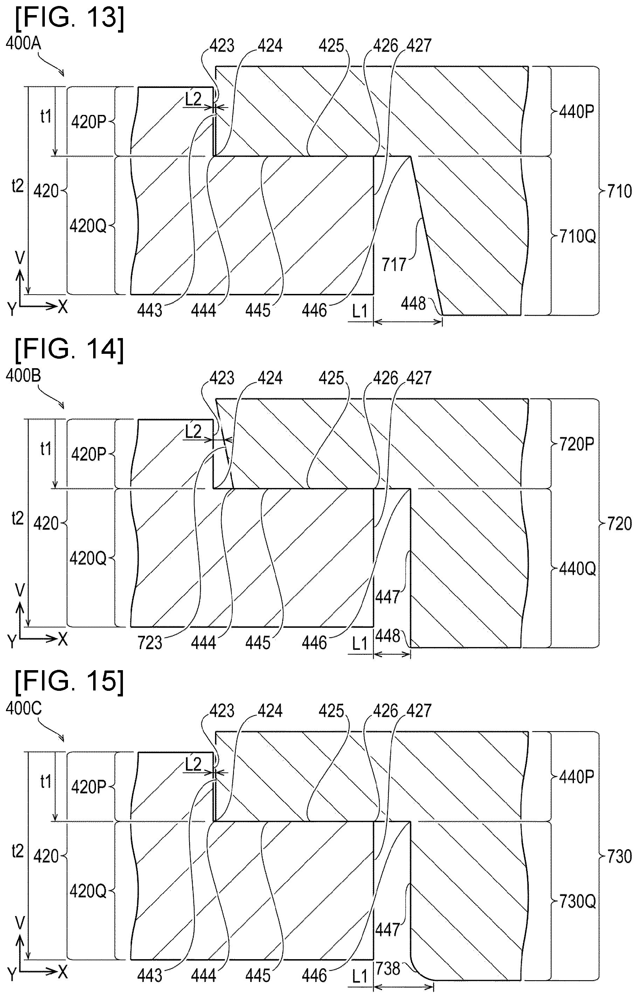

A sealing plug 710 according to a modification 1 of the embodiment will be described below with reference to FIG. 13. FIG. 13 is an end view of a central portion of an outer casing 400A according to the modification 1 of the embodiment.

### (Structure of the sealing plug 710 according to the modification 1 of the embodiment)

As illustrated in FIG. 13, the outer casing 400A includes the sealing plug 710 instead of the sealing plug 440 according to the embodiment. The sealing plug 710 includes the first insert 440P and a second insert 710Q. The second insert 710Q is structurally similar to the second insert 440Q of the sealing plug 440 according to the embodiment except for the shape of a second outer circumferential surface 717.

Those parts of the modification 1 of the embodiment illustrated in FIG. 13 that are identical to those of the embodiment are denoted by reference characters identical to those of the embodiment and will be omitted from description. Those parts of the modification 1 of the embodiment illustrated in FIG. 13 that are different from those of the embodiment are denoted by reference characters different from those of the embodiment and will be described below.

The second outer circumferential surface 717 of the sealing plug 710 is progressively constricted in the directions across the stacked direction V from the outside to inside of the lid 420. The outside of the lid 420 is a side of the outer surface 421 of the lid 420 and corresponds to the outside of the battery 1. The inside of the lid 420 is a side of the inner surface 429 of the lid 420 and corresponds to the inside of the battery 1. The directions across the stacked direction V are the longitudinal direction X and the transverse direction Y. The second outer circumferential surface 717 represents a slanted surface of the second insert 710Q across the stacked direction V. The second outer circumferential surface 717 extends straight on the second insert 710Q. The second outer circumferential surface 717 is slanted away from the second inner circumferential surface 427 of the second penetrating portion 420Q from the outside to inside of the lid 420. The second insert 710Q is of a frustoconical shape defined by the second outer circumferential surface 717. The second insert 710Q has its cross-sectional shape in a plane defined by the longitudinal direction X and the transverse direction Y, the cross-sectional shape being progressively smaller from the outside to inside of the lid 420.

The second outer circumferential surface 717 is not limited to the structure according to the modification 1 of the embodiment in which the second outer circumferential surface 717 is slanted straight away from the second inner circumferential surface 427 of the second penetrating portion 420Q from the outside to inside of the lid 420. The second outer circumferential surface 717 may be of an arcuate shape curved in a recessed manner toward the directions across the stacked direction V away from the second inner circumferential surface 427 of the second penetrating portion 420Q from the outside to inside of the lid 420. The arcuate shape curved in a recessed manner of the second outer circumferential surface 717 is a shape that is recessed inwardly toward the second insert 710Q. The second outer circumferential surface 717 may be of an arcuate shape curved in a manner protruding toward the directions across the stacked direction V from the outside to inside of the lid 420. If the second outer circumferential surface 717 is of an arcuate shape curved in a protruding manner, then the arcuate shape is more spaced from the second inner circumferential surface 427 of the lid 420 than the slanted surface illustrated in FIG. 13.

The second outer circumferential surface 717 is not limited to the structure according to the modification 1 of the embodiment in which the second outer circumferential surface 717 is formed in an entire region of the second insert 710Q along the stacked direction V. The second outer circumferential surface 717 may be formed only in a partial region of the second insert 710Q along the stacked direction V. Specifically, the second insert 710Q may be a combination of the second outer circumferential surface 717 that is slanted as illustrated in FIG. 13 and the second outer circumferential surface 447 that is perpendicular as illustrated in FIG. 11, for example. In the case of this structure, the second outer circumferential surface 717 that is slanted is formed on a distal end portion of the second insert 710Q, whereas the second outer circumferential surface 447 that is perpendicular is formed on a proximal end portion of the second insert 710Q. The distal end portion is positioned more on the inside of the battery 1 than the proximal end portion. In the case of this structure, in other words, the second insert 710Q is shaped as a combination of a frustoconical shape and a cylindrical shape.

### (Advantages of the sealing plug 710 according to the modification 1 of the embodiment)

(8) As illustrated in FIG. 13, the second outer circumferential surface 717 of the sealing plug 710 is progressively constricted in the directions across the stacked direction V from the outside to inside of the lid 420. With this structure, from the outside to inside of the lid 420 where the length of the sealing plug 710 that is inserted into the lid 420 is relatively large, the clearance between the second outer circumferential surface 717 of the sealing plug 710 and the second inner circumferential surface 427 of the lid 420 is increased. The second outer circumferential surface 717 of the sealing plug 710 has a large positioning error with respect to the second inner circumferential surface 427 of the lid 420 from the outside to inside of the lid 420. However, the second outer circumferential surface 717 of the sealing plug 710 has a larger margin for a positioning error with respect to the second inner circumferential surface 427 of the lid 420 on a portion positioned on an inside of the lid 420 than on a portion positioned on an outside of the lid 420. Therefore, when attaching the sealing plug 710 and the lid 420 to each other, the second outer circumferential surface 717 of the sealing plug 710 and the lid 420 are prevented from interfering with each other even if the sealing plug 710 and the lid 420 are relatively tilted. As a consequence, the sealing plug 710 and the lid 420 can sufficiently be attached and joined to each other.

The second outer circumferential surface 717 of the sealing plug 710 does not need to be progressively constricted in the directions across the stacked direction V in the entire region along the stacked direction V from the outside to inside of the lid 420. The second outer circumferential surface 717 may be progressively constricted in the directions across the stacked direction V in only a partial region along the stacked direction V from the outside to inside of the lid 420. In other words, the second outer circumferential surface 717 may include a portion that is progressively constricted in the directions across the stacked direction V from the outside to inside of the lid 420.

### (Sealing plug 720 according to a modification 2 of the embodiment)

A sealing plug 720 according to a modification 2 of the embodiment will be described below with reference to FIG. 14. FIG. 14 is an end view of a central portion of an outer casing 400B according to the modification 2 of the embodiment.

### (Structure of the sealing plug 720 according to the modification 2 of the embodiment)

As illustrated in FIG. 14, the outer casing 400B includes the sealing plug 720 instead of the sealing plug 440 according to the embodiment. The sealing plug 720 includes a first insert 720P and the second insert 440Q. The first insert 720P is structurally similar to the first insert 440P of the sealing plug 440 according to the embodiment except for the shape of a first outer circumferential surface 723.

Those parts of the modification 2 of the embodiment illustrated in FIG. 14 that are identical to those of the embodiment are denoted by reference characters identical to those of the embodiment and will be omitted from description. Those parts of the modification 2 of the embodiment illustrated in FIG. 14 that are different from those of the embodiment are denoted by reference characters different from those of the embodiment and will be described below.

The first outer circumferential surface 723 of the sealing plug 720 is progressively constricted in the directions across the stacked direction V from the outside to inside of the lid 420. The outside of the lid 420 is a side of the outer surface 421 of the lid 420 and corresponds to the outside of the battery 1. The inside of the lid 420 is a side of the inner surface 429 of the lid 420 and corresponds to the inside of the battery 1. The directions across the stacked direction V are the longitudinal direction X and the transverse direction Y. The first outer circumferential surface 723 represents a slanted surface of the first insert 720P across the stacked direction V. The first outer circumferential surface 723 extends straight on the first insert 720P. The first outer circumferential surface 723 is slanted away from the first inner circumferential surface 423 of the first penetrating portion 420P from the outside to inside of the lid 420. The first insert 720P is of a frustoconical shape defined by the first outer circumferential surface 723. The first insert 720P has its cross-sectional shape in a plane defined by the longitudinal direction X and the transverse direction Y, the cross-sectional shape being progressively smaller from the outside to inside of the lid 420.

The first outer circumferential surface 723 is not limited to the structure according to the modification 2 of the embodiment in which the first outer circumferential surface 723 is slanted straight away from the first inner circumferential surface 423 of the first penetrating portion 420P from the outside to inside of the lid 420. The first outer circumferential surface 723 may be of an arcuate shape curved in a recessed manner toward the directions across the stacked direction V away from the first inner circumferential surface 423 of the first penetrating portion 420P from the outside to inside of the lid 420. The arcuate shape curved in a recessed manner of the first outer circumferential surface 723 is a shape that is recessed inwardly toward the first insert 720P. The first outer circumferential surface 723 may be of an arcuate shape curved in a manner protruding toward the directions across the stacked direction V from the outside to inside of the lid 420. If the first outer circumferential surface 723 is of an arcuate shape curved in a protruding manner, then the arcuate shape is more spaced from the first inner circumferential surface 423 of the lid 420 than the slanted surface illustrated in FIG. 14.

The first outer circumferential surface 723 is not limited to the structure according to the modification 2 of the embodiment in which the first outer circumferential surface 723 is formed in an entire region of the first insert 720P along the stacked direction V. The first outer circumferential surface 723 may be formed only in a partial region of the first insert 720P along the stacked direction V. Specifically, the first insert 720P may be a combination of the first outer circumferential surface 723 that is slanted as illustrated in FIG. 14 and the first outer circumferential surface 443 that is perpendicular as illustrated in FIG. 11, for example. In the case of this structure, in the first insert 720P, the first outer circumferential surface 723 that is slanted is formed on a distal end portion of the first insert 720P, whereas the first outer circumferential surface 443 that is perpendicular is formed on a proximal end portion of the first insert 720P. The distal end portion is positioned more on the inside of the battery 1 than the proximal end portion. In the case of this structure, in other words, the first insert 720P is shaped as a combination of a frustoconical shape and a cylindrical shape.

### (Advantages of the sealing plug 720 according to the modification 2 of the embodiment)

(9) As illustrated in FIG. 14, the first outer circumferential surface 723 of the sealing plug 720 is progressively constricted in the directions across the stacked direction V from the outside to inside of the lid 420. With this structure, from the outside to inside of the lid 420 where the length of the sealing plug 720 that is inserted into the lid 420 is relatively large, the clearance between the first outer circumferential surface 723 of the sealing plug 720 and the first inner circumferential surface 423 of the lid 420 is increased. The first outer circumferential surface 723 of the sealing plug 720 has a large positioning error with respect to the first inner circumferential surface 423 of the lid 420 from the outside to inside of the lid 420. However, the first outer circumferential surface 723 of the sealing plug 720 has a larger margin for a positioning error with respect to the first inner circumferential surface 423 of the lid 420 on a portion positioned on the inside of the lid 420 than on a portion positioned on the outside of the lid 420, in the directions across the stacked direction V. Hence, when attaching the sealing plug 720 and the lid 420 to each other, the first outer circumferential surface 723 of the sealing plug 720 and the lid 420 are prevented from interfering with each other even if the sealing plug 720 and the lid 420 are relatively tilted. As a consequence, the sealing plug 720 and the lid 420 can sufficiently be attached and joined to each other.

The first outer circumferential surface 723 of the sealing plug 720 does not need to be progressively constricted in the directions across the stacked direction V in the entire region along the stacked direction V from the outside to inside of the lid 420. The first outer circumferential surface 723 may be progressively constricted in the directions across the stacked direction V in only a partial region along the stacked direction V from the outside to inside of the lid 420. In other words, the first outer circumferential surface 723 may include a portion that is progressively constricted in the directions across the stacked direction V from the outside to inside of the lid 420.

### (Sealing plug 730 according to a modification 3 of the embodiment)

A sealing plug 730 according to a modification 3 of the embodiment will be described below with reference to FIG. 15. FIG. 15 is an end view of a central portion of an outer casing 400C according to the modification 3 of the embodiment.

### (Structure of the sealing plug 730 according to the modification 3 of the embodiment)

As illustrated in FIG. 15, the outer casing 400C includes the sealing plug 730 instead of the sealing plug 440 according to the embodiment. The sealing plug 730 includes the first insert 440P and a second insert 730Q. The second insert 730Q is structurally similar to the second insert 440Q of the sealing plug 440 according to the embodiment except for the shape of a third end 738.

Those parts of the modification 3 of the embodiment illustrated in FIG. 15 that are identical to those of the embodiment are denoted by reference characters identical to those of the embodiment and will be omitted from description. Those parts of the modification 3 of the embodiment illustrated in FIG. 15 that are different from those of the embodiment are denoted by reference characters different from those of the embodiment and will be described below.

The third end 738 of the second inner circumferential surface 447 of the sealing plug 730 at an end of the inside of the lid 420 is of an arcuate shape. The inside of the lid 420 is the inner surface 429 of the lid 420 and corresponds to the inside of the battery 1. The third end 738 is positioned at the boundary between the second outer circumferential surface 447 and the inner surface 429. The third end 738 is provided by forming the boundary between the second outer circumferential surface 447 and the inner surface 429 into an arcuate shape. The third end 738 is placed within a region defined by an imaginary line extending downwardly in FIG. 15 from the second outer circumferential surface 447 and an imaginary line extending leftwardly in FIG. 15 from the inner surface 429.

### (Advantages of the sealing plug 730 according to the modification 3 of the embodiment)

(10) As illustrated in FIG. 15, the third end 738, positioned on the inside of the lid 420, of the second outer circumferential surface 447 of the sealing plug 730 is of the arcuate shape. With this structure, the clearance between the third end 738 where the length of the sealing plug 730 that is inserted into the lid 420 is largest relatively to the lid 420 and the second inner circumferential surface 427 of the lid 420 can be made largest. Since the third end 738 of the sealing plug 730 is positioned on the innermost side of the lid 420, the third end 738 has the largest positioning error with respect to the second inner circumferential surface 427 of the lid 420. However, as the third end 738 of the sealing plug 730 is rounded in the arcuate shape, the third end 738 has the relatively largest margin for a positioning error with respect to the second inner circumferential surface 427 of the lid 420 in the directions across the stacked direction V. Therefore, even if the sealing plug 730 and the lid 420 are tilted relatively to each other at the time of attaching the sealing plug 730 and the lid 420 to each other, the third end 738 of the sealing plug 730 and the lid 420 are prevented from interfering with each other. As a result, the sealing plug 730 and the lid 420 can sufficiently be attached and joined to each other. Since the third end 738 of the sealing plug 730 is of the arcuate shape, a load imposed if the third end 738 interferes with the second inner circumferential surface 427 of the lid 420 or other members is reduced. A load imposed at the time of interference is reduced on at least either one of the sealing plug 730 and the lid 420.

The third end 738 may be of a straight shape slanted with respect to the stacked direction V as viewed from a direction perpendicular to the stacked direction V. In other words, the third end 738 may be shaped as a recess. The direction perpendicular to the stacked direction V is the transverse direction Y, for example. In this case, the third end 738 is provided as a slanted surface at the boundary between the second outer circumferential surface 447 and the inner surface 429. The slanted surface is slanted away from the second inner circumferential surface 427 of the lid 420 from the outside to inside of the lid 420. The outside of the lid 420 represents the outside of the battery 1. The inside of the lid 420 represents the inside of the battery 1.

### (Sealing plug 740 according to a modification 4 of the embodiment)

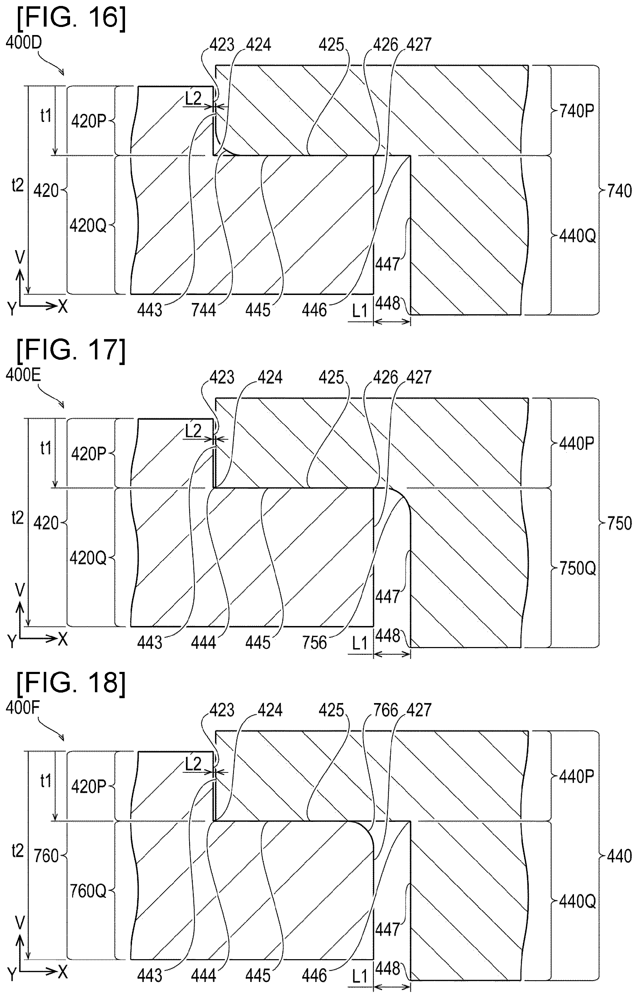

A sealing plug 740 according to a modification 4 of the embodiment will be described below with reference to FIG. 16. FIG. 16 is an end view of a central portion of an outer casing 400D according to the modification 4 of the embodiment.

### (Structure of the sealing plug 740 according to the modification 4 of the embodiment)

As illustrated in FIG. 16, the outer casing 400D includes the sealing plug 740 instead of the sealing plug 440 according to the embodiment. The sealing plug 740 includes a first insert 740P and the second insert 440Q. The first insert 740P is structurally similar to the first insert 440P of the sealing plug 440 according to the embodiment except for the shape of a fourth end 744.

Those parts of the modification 4 of the embodiment illustrated in FIG. 16 that are identical to those of the embodiment are denoted by reference characters identical to those of the embodiment and will be omitted from description. Those parts of the modification 4 of the embodiment illustrated in FIG. 16 that are different from those of the embodiment are denoted by reference characters different from those of the embodiment and will be described below.

The fourth end 744 of the sealing plug 740 is positioned at the boundary between the first outer circumferential surface 443 and the confronted surface 445. The fourth end 744 is provided by forming the boundary between the first outer circumferential surface 443 and the confronted surface 445 into an arcuate shape. The fourth end 744 is placed within a region defined by an imaginary line extending downwardly in FIG. 16 from the first circumferential surface 443 and an imaginary line extending leftwardly in FIG. 16 from the confronted surface 445.

### (Advantages of the sealing plug 740 according to the modification 4 of the embodiment)

(11) As illustrated in FIG. 16, the fourth end 744 that is positioned at the boundary between the first outer circumferential surface 443 of the sealing plug 740 and the confronted surface 445 is of the arcuate shape. With this structure, the clearance between the fourth end 744 where the length of the sealing plug 740 that is inserted into the lid 420 is largest relatively to the lid 420 and the first inner circumferential surface 423 of the lid 420 can be made largest. Since the fourth end 744 of the sealing plug 740 is positioned on the innermost side of the lid 420 (a side closer to the charge/discharge body 100) in the first insert 740P, the fourth end 744 has the largest positioning error with respect to the first inner circumferential surface 423 of the lid 420. However, as the fourth end 744 of the sealing plug 740 is rounded in the arcuate shape, the fourth end 744 has the relatively largest margin for a positioning error with respect to the first inner circumferential surface 423 of the lid 420. Hence, even if the sealing plug 740 and the lid 420 are tilted relatively to each other at the time of attaching the sealing plug 740 and the lid 420 to each other, the fourth end 744 of the sealing plug 740 and the lid 420 are prevented from interfering with each other. As a result, the sealing plug 740 and the lid 420 can sufficiently be attached and joined to each other. Since the fourth end 744 of the sealing plug 740 is of the arcuate shape, a load imposed if the fourth end 744 interferes with the first inner circumferential surface 423 of the lid 420 or other members is reduced. A load imposed at the time of interference is reduced on at least either one of the sealing plug 740 and the lid 420.

The fourth end 744 may be of a straight shape slanted with respect to the stacked direction V as viewed from a direction perpendicular to the stacked direction V, for example. In other words, the fourth end 744 may be shaped as a recess. The direction perpendicular to the stacked direction V is the transverse direction Y, for example. In this case, the fourth end 744 is provided as a slanted surface at the boundary between the first outer circumferential surface 443 and the confronted surface 445. The slanted surface is slanted away from the first inner circumferential surface 423 of the first penetrating portion 420P from the outside to inside of the lid 420. The outside of the lid 420 represents the outside of the battery 1. The inside of the lid 420 represents the inside of the battery 1.

### (Sealing plug 750 according to a modification 5 of the embodiment)

A sealing plug 750 according to a modification 5 of the embodiment will be described below with reference to FIG. 17. FIG. 17 is an end view of a central portion of an outer casing 400E according to the modification 5 of the embodiment.

### (Structure of the sealing plug 750 according to the modification 5 of the embodiment)

As illustrated in FIG. 17, the outer casing 400E includes the sealing plug 750 instead of the sealing plug 440 according to the embodiment. The sealing plug 750 includes the first insert 440P and a second insert 750Q. The second insert 750Q is structurally similar to the second insert 440Q of the sealing plug 440 according to the embodiment except for the shape of a fifth end 756.

Those parts of the modification 5 of the embodiment illustrated in FIG. 17 that are identical to those of the embodiment are denoted by reference characters identical to those of the embodiment and will be omitted from description. Those parts of the modification 5 of the embodiment illustrated in FIG. 17 that are different from those of the embodiment are denoted by reference characters different from those of the embodiment and will be described below.

The fifth end 756 of the sealing plug 750 is provided by forming the boundary between the confronted surface 445 and the second outer circumferential surface 447 into an arcuate shape. The fifth end 756 is of an arcuate shape that is curved in a recessed manner. The arcuate shape of the fifth end 756 that is curved in a recessed manner is a shape that protrudes from the first insert 440P and the second insert 750Q and is recessed toward the first insert 440P and the second insert 750Q. The fifth end 756 protrudes toward the lid 420 from a region defined by an imaginary line extending rightwardly in FIG. 17 from the confronted surface 445 and an imaginary line extending upwardly in FIG. 17 from the second outer circumferential surface 447.

### (Advantages of the sealing plug 750 according to the modification 5 of the embodiment)

(12) As illustrated in FIG. 17, the fifth end 756 that is positioned at the boundary between the confronted surface 445 of the sealing plug 750 and the second outer circumferential surface 447 is of the arcuate shape and spaced from the second inner circumferential surface 427 of the lid 420. With this structure, though the fifth end 756 is of the arcuate shape, since the fifth end 756 is spaced from the second inner circumferential surface 427 of the lid 420, the sealing plug 750 and the lid 420 are prevented from interfering with each other. As a result, the sealing plug 750 and the lid 420 can sufficiently be attached and joined to each other. The sealing plug 750 is easy to manufacture because the fifth end 756 is of the arcuate shape.

The fifth end 756 may be of a straight shape slanted with respect to the stacked direction V as viewed from a direction perpendicular to the stacked direction V, for example. In other words, the fifth end 756 may be shaped as a recess. The direction perpendicular to the stacked direction V is the transverse direction Y, for example. In this case, the fifth end 756 is provided as a slanted surface at the boundary between the confronted surface 445 and the second inner circumferential surface 447. The slanted surface is slanted away from the second inner circumferential surface 427 of the second penetrating portion 420Q from the outside to inside of the lid 420. The outside of the lid 420 represents the outside of the battery 1. The inside of the lid 420 represents the inside of the battery 1.

### (Lid 760 according to a modification 6 of the embodiment)

A lid 760 according to a modification 6 of the embodiment will be described below with reference to FIG. 18. FIG. 18 is an end view of a central portion of an outer casing 400F according to the modification 6 of the embodiment.

### (Structure of the lid 760 according to the modification 6 of the embodiment)

As illustrated in FIG. 18, the outer casing 400F includes the lid 760 instead of the lid 420 according to the embodiment. The lid 760 includes the first penetrating portion 420P and a second penetrating portion 760Q. The second penetrating portion 760Q is structurally similar to the second penetrating portion 420Q of the lid 420 according to the embodiment except for the shape of a sixth end 766.

Those parts of the modification 6 of the embodiment illustrated in FIG. 18 that are identical to those of the embodiment are denoted by identical reference characters to those of the embodiment and will be omitted from description. Those parts of the modification 6 of the embodiment illustrated in FIG. 18 that are different from those of the embodiment are denoted by different reference characters from those of the embodiment and will be described below.

The sixth end 766 of the second penetrating portion 760Q of the lid 760 that is positioned at the boundary between the confronting surface 425 and the second inner circumferential surface 427 is of an arcuate shape. The sixth end 766 is placed within a region defined by an imaginary line extending rightwardly in FIG. 18 from the confronting surface 425 and an imaginary line extending upwardly in FIG. 18 from the second inner circumferential surface 427. The distance between the sixth end 766 of the lid 760 and the second outer circumferential surface 447 of the sealing plug 440 is larger than the distance between the second inner circumferential surface 427 of the lid 760 and the second outer circumferential surface 447 of the sealing plug 440.

### (Advantages of the lid 760 according to the modification 6 of the embodiment)

(13) As illustrated in FIG. 18, the sixth end 766 that is positioned at the boundary between the confronting surface 425 of the lid 760 and the second inner circumferential surface 427 is of the arcuate shape and spaced from the second outer circumferential surface 447 of the sealing plug 440. With this structure, the clearance between the sixth end 766 of the lid 760 and the first end 446 of the sealing plug 440 can be relatively increased. As the sixth end 766 of the lid 760 is rounded in the arcuate shape, the sixth end 766 has a relatively large margin for a positioning error with respect to the first end 446 and the second outer circumferential surface 447 of the sealing plug 440. Consequently, even if the sealing plug 440 and the lid 760 are tilted relatively to each other at the time of attaching the sealing plug 440 and the lid 760 to each other, the sealing plug 440 and the sixth end 766 of the lid 760 are prevented from interfering with each other. Furthermore, since the sixth end 766 of the lid 760 is rounded in the arcuate shape, even if the sealing plug 440 and the lid 760 are tilted relatively to each other, the confronted surface 445 of the sealing plug 440 and the sixth end 766 of the lid 760 are prevented from interfering with each other. As a result, the sealing plug 440 and the lid 760 can sufficiently be attached and joined to each other.

The sixth end 766 may be of a straight shape slanted with respect to the stacked direction V as viewed from a direction perpendicular to the stacked direction V, for example. In other words, the sixth end 766 may be shaped as a recess. The direction perpendicular to the stacked direction V is the transverse direction Y, for example. In this case, the sixth end 766 is provided as a slanted surface at the boundary between the confronting surface 425 and the second inner circumferential surface 427. The slanted surface is slanted away from the second outer circumferential surface 477 of the second insert 440Q from the outside to inside of the lid 760. The outside of the lid 760 represents the outside of the battery 1. The inside of the lid 760 represents the inside of the battery 1.

### (Sealing plug 770 according to a modification 7 of the embodiment)

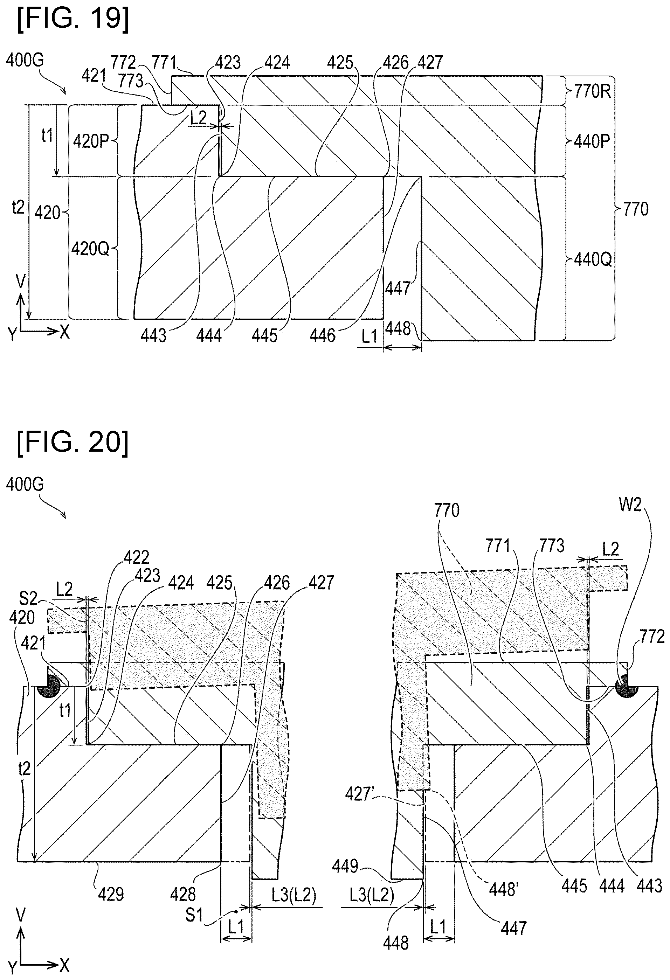

A sealing plug 770 according to a modification 7 of the embodiment will be described below with reference to FIG. 19. FIG. 19 is an end view of a central portion of an outer casing 400G according to the modification 7 of the embodiment.

### (Structure of the sealing plug 770 according to the modification 7 of the embodiment)

As illustrated in FIG. 19, the outer casing 400G includes the sealing plug 770 instead of the sealing plug 440 according to the embodiment. The sealing plug 770 includes a base 770R as well as the first insert 440P and the second insert 440Q.

Those parts of the modification 7 of the embodiment illustrated in FIG. 19 that are identical to those of the embodiment are denoted by reference characters identical to those of the embodiment and will be omitted from description. Those parts of the modification 7 of the embodiment illustrated in FIG. 19 that are different from those of the embodiment are denoted by reference characters different from those of the embodiment and will be described below.

The base 770R of the sealing plug 770 corresponds to a joint in a fillet weld, and the first insert 440P corresponds to a joint in a but weld. Specifically, the base 770R corresponds to a joint in a lap fillet weld. The base 770R is contiguous to the first insert 440P along the stacked direction V from outside the lid 420. The base 770R is of a cylindrical shape, for example. The base 770R is larger in diameter than the first insert 440P. The central axis of the base 770R is aligned with the central axis of the first insert 440P. The base 770R includes an outer surface 771, an outer circumferential surface 772, and an abutting surface 773. The outer surface 771 of the base 770R is positioned on the outside of the battery 1 and is of a circular shape. The abutting surface 773 is opposite the outer surface 771 in the stacked direction V and is of an annular shape. The abutting surface 773 is held in surface contact with the outer surface 421 of the lid 420. The base 770R is integrally formed with the first insert 440P and the second insert 440Q.

### (Method of manufacturing the battery 1 according to the modification 7 of the embodiment)

The method of manufacturing the battery 1 according to the modification 7 of the embodiment is characterized only in the manner in which the sealing plug 770 and the lid 420 are attached and joined to each other. Consequently, only the manner in which the sealing plug 770 and the lid 420 are attached and joined to each other in the method of manufacturing the battery 1 according to the modification 7 of the embodiment will be described below with reference to FIG. 20. FIG. 20 is an end view illustrating the manner in which the sealing plug 770 and lid 420 are attached and joined to each other in the method of manufacturing the battery 1 according to the modification 7 of the embodiment.

The method of manufacturing the battery 1 according to the modification 7 of the embodiment has a first step and a second step. In the first step, while the confronting surface 425 of the lid 420 and the confronted surface 445 of the sealing plug 770 are facing each other in the stacked direction V, the lid 420 and the sealing plug 770 are brought closer to each other along the stacked direction V until the lid 420 and the sealing plug 770 are attached to each other. In the second step, the lid 420 and the sealing plug 770 are welded to each other after the first step.

The first step according to the modification 7 of the embodiment includes a feature to be described below, in addition to the first step according to the embodiment. In the first step, while the outer surface 421 of the lid 420 and the abutting surface 773 of the sealing plug 770 are facing each other in the stacked direction V, the sealing plug 770 is brought closer to the lid 420 along the stacked direction V until the sealing plug 770 is attached to the lid 420. With regard to the method of manufacturing the battery 1 according to the embodiment, it has been described that the sealing plug 440 is attached to the lid 420 without the first insert 440P and the second insert 440Q of the sealing plug 440 being tilted or lifted with respect to the lid 420. Hence, the abutting surface 773 of the base 770R is sufficiently held in surface contact with the outer surface 421 of the lid 420.

In the second step according to the modification 7 of the embodiment, the sealing plug 770 and the lid 420 are welded to each other. According to the modification 7 of the embodiment, the sealing plug 770 and the lid 420 are laser-welded, for example. As illustrated in FIG. 20, a welding bead W2 is formed at the lower end in FIG. 20 of the outer circumferential surface 772 of the sealing plug 770 and the outer surface 421 of the lid 420. The welding bead W2 is of an annular shape along the base 770R of the sealing plug 770.

### (Advantages of the sealing plug 770 and the method of manufacturing the sealing plug 770 according to the modification 7 of the embodiment)

(14) As illustrated in FIG. 19, the sealing plug 770 includes the base 770R that is contiguous to the first insert 440P along the stacked direction V from outside the lid 420. The base 770R is joined to the outer surface 421 positioned on the outside of the lid 420 along the stacked direction V. With this structure, for joining the base 770R to the lid 420, it is a prerequisite for the first insert 440P and the second insert 440Q of the sealing plug 770 not to be tilted or lifted with respect to the lid 420. If the first insert 440P and the second insert 440Q of the sealing plug 770 are tilted or lifted with respect to the lid 420, then the abutting surface 773 of the base 770R cannot be brought into surface contact with the outer surface 421 of the lid 420. According to the embodiment, it has been described with regard to this point that the sealing plug 440 is attached to the lid 420 without the first insert 440P and the second insert 440Q of the sealing plug 440 being tilted or lifted with respect to the lid 420. According to the modification 7 of the embodiment, therefore, the base 770R of the sealing plug 770 can sufficiently be held in surface contact with the lid 420 and joined thereto.

### (Sealing plug 780 according to a modification 8 of the embodiment)

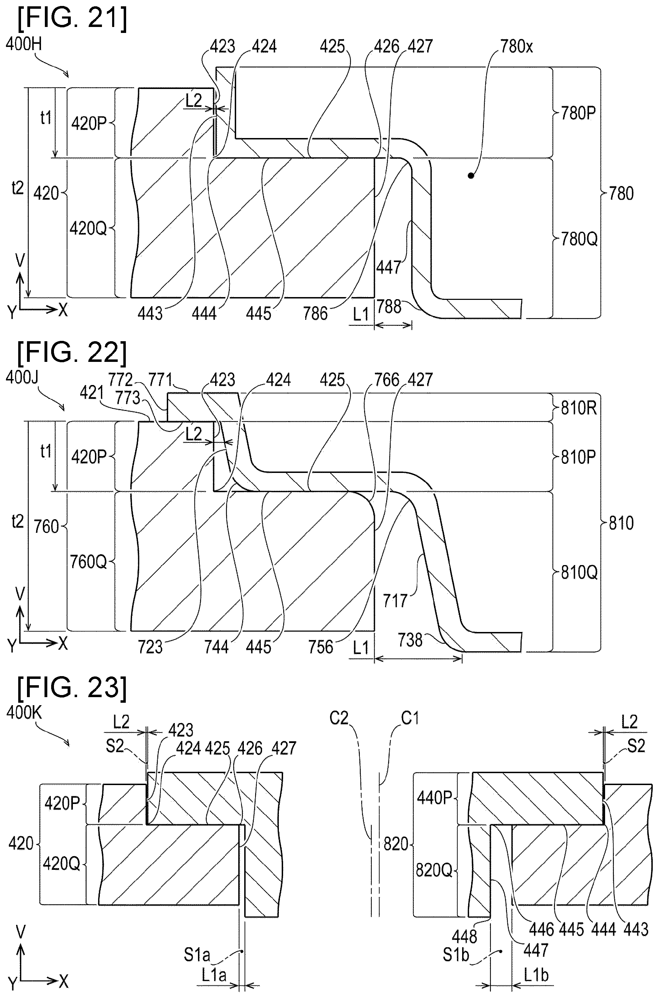

A sealing plug 780 according to a modification 8 of the embodiment will be described below with reference to FIG. 21. FIG. 21 is an end view of a central portion of an outer casing 400H according to the modification 8 of the embodiment.

### (Structure of the sealing plug 780 according to the modification 8 of the embodiment)

As illustrated in FIG. 21, the outer casing 400H includes a cavity 780x formed in the outside of the battery 1. The sealing plug 780 includes a first insert 780P and a second insert 780Q. The first insert 780P is structurally similar to the first insert 440P of the sealing plug 440 according to the embodiment except that the first insert 780P has the cavity 780x. The second insert 780Q is structurally similar to the second insert 440Q of the sealing plug 440 according to the embodiment except that the second insert 780Q has the cavity 780x and has a curved end.

Those parts of the modification 8 of the embodiment illustrated in FIG. 21 that are identical to those of the embodiment are denoted by reference characters identical to those of the embodiment and will be omitted from description. Those parts of the modification 8 of the embodiment illustrated in FIG. 21 that are different from those of the embodiment are denoted by reference characters different from those of the embodiment and will be described below.

The sealing plug 780 has the first insert 780P and the second insert 780Q formed by press forming of a flat sheet of metal in the stacked direction V. The sealing plug 780 has the cavity 780x formed in the outside of the battery 1 by press forming. The sealing plug 780 has a uniform thickness along the longitudinal direction X and the transverse direction Y of the battery 1 across the stacked direction V, except in the vicinity of the first outer circumferential surface 443. The sealing plug 780 may have different thicknesses along the longitudinal direction X and the transverse direction Y of the battery 1 across the stacked direction V. The second insert 780Q has a first end 786 and a second end 788 that are each formed to an arcuate shape by press forming.

### (Advantages of the sealing plug 780 according to the modification 8 of the embodiment)

(17) As illustrated in FIG. 21, the sealing plug 780 has the first insert 780P and the second insert 780P formed by press forming of the flat sheet of metal in the stacked direction V.

(19) The sealing plug 780 that has been subjected to press forming in the stacked direction V is used in manufacturing the battery 1. A method of manufacturing the battery 1 may include a step of forming the sealing plug 780 by press forming of a flat sheet of metal in the stacked direction V.

With such a structure, it is easy to manufacture the sealing plug 780. With such a structure, especially, it is easy to mass-produce the sealing plug 780. Meanwhile, the thickness of the sealing plug 780 in the stacked direction V is smaller than the thickness of the sealing plug 440 according to the embodiment. Consequently, when the sealing plug 780 is attached to the lid 420, the sealing plug 780 is liable to be deformed along the directions across the stacked direction V. However, as with the sealing plug 440 according to embodiment, the sealing plug 780 is prevented from being attached to the lid 420 while being partly lifted from the lid 420. In other words, the sealing plug 780 is prevented from being attached to the lid 420 while being tilted with respect to the lid 420. Moreover, the sealing plug 780 is prevented from being attached to the lid 420 while being wholly lifted from the lid 420. Furthermore, the sealing plug 780 is prevented from being attached to the lid 420 while being distorted or flexed with respect to the lid 420. As a result, when the sealing plug 780 is attached to the lid 420, the sealing plug 780 is prevented from being deformed along the directions across the stacked direction V. Therefore, the sealing plug 780 and the lid 420 can sufficiently be joined to each other by welding, for example.

The structure of the sealing plug 780 according to the modification 8 of the embodiment is also applicable to the sealing plugs according to the modifications 1 through 7 of the embodiment.

### (Other embodiments)

The battery according to the present invention is not limited to the structural details of the battery described in the embodiment, and may appropriately be configured on the basis of the contents described in the scope of claims.

The embodiment has been described in detail or simply for easier understanding of the invention, and may not necessarily need to have all the structural details described above or may have structural details not illustrated. Some of the structural details of the embodiment may be deleted or replaced with structural details of other embodiments or combined with structural details of other embodiments. A sealing plug may include the structural details of a combination of two or more of the embodiment and the modifications 1 through 8 of the embodiment.

### (Sealing plug 810 and lid 760 in a best mode according to another embodiment)

FIG. 22 illustrates a central portion of an outer casing 400J constructed in a best mode including the structural details of the embodiment and the modifications 1 through 8 of the embodiment.

As illustrated in FIG. 22, the outer casing 400J is of a structure based on a combination of the embodiment and the modifications 1 through 8 of the embodiment. In other words, the structure of the outer casing 400J is a structure in a best mode including the structural details of all of the embodiment and the modifications 1 through 8 of the embodiment. The outer casing 400J includes the lid 760 and a sealing plug 810. The lid 760 includes the first penetrating portion 420P and the second penetrating portion 760Q. The sealing plug 810 includes a first insert 810P, a second insert 810Q, and a base 810R.

### (Sealing plug 820 whose central axis is relatively disposed off-center and lid 420 according to another embodiment)

FIG. 23 illustrates a central portion of an outer casing 400K in which a sealing plug 820 and the lid 420 are disposed off-center and that is applicable to the structural details of the embodiment and the modifications 1 through 8 of the embodiment.

As illustrated in FIG. 23, the outer casing 400K includes the sealing plug 820 instead of the sealing plug 440 according to the embodiment. The sealing plug 820 includes the first insert 440P and a second insert 820Q. The second insert 820Q is structurally similar to the second insert 440Q of the sealing plug 440 according to the embodiment except for its relative positional relation with the first insert 440P. The liquid introduction hole 420c in the lid 420 has a central axis C1, and the second insert 820Q of the sealing plug 820 has a central axis C2, the central axis C1 and the central axis C2 being out of alignment with each other. The central axis C1 represents the central axes of the first penetrating portion 420P and the second penetrating portion 420Q of the lid 420. The central axis C1 also represents the central axis of the first insert 440P of the sealing plug 820. In other words, in the sealing plug 820, the central axis C1 of the first insert 440P and the central axis C2 of the second insert 820Q are spaced from each other. A length L1a of a clearance S1a in a left side (one end side) of FIG. 23 is smaller than a length L1b of a clearance S1b in a right side (other end side) of FIG. 23.

As illustrated in FIG. 23, the central axis C1 of the first insert 440P of the sealing plug 820 is aligned with the central axis of the liquid introduction hole 420c of the lid 420. The central axis C1 of the first insert 440P of the sealing plug 820 may also be out of alignment with the central axis of the liquid introduction hole 420c of the lid 420. In this case, the first insert 440P and the second insert 820Q may be displaced to the same position or different positions out of alignment with the central axis of the liquid introduction hole 420c. The central axis of the first penetrating portion 420P in the liquid introduction hole 420c in the lid 420 and the central axis of the second penetrating portion 420Q in the liquid introduction hole 420c in the lid 420 may be spaced from each other.

The shape of the sealing plug and the shape of the liquid introduction hole in the lid (housing body) may be of various forms. Specifically, the central axis of the sealing plug and the central axis of the liquid introduction hole in the lid may intentionally be displaced in position from each other. Moreover, the central axis of the sealing plug and the central axis of the liquid introduction hole in the lid may be displaced in position from each other as a result of a manufacturing error. In such a case, the clearance between the second outer circumferential surface of the sealing plug and the second inner circumferential surface of the liquid introduction hole includes a relatively narrow portion and a relatively wide portion in the circumferential directions of the liquid introduction hole over 360°. For example, it is highly possible for a relatively narrow clearance at one end and a relatively wide clearance at the other end that is circumferentially 180° opposite the relatively narrow clearance to occur between the outer circumferential surface of the sealing plug and the inner circumferential surface of the liquid introduction hole. The clearance at one end represents the clearance S1a illustrated in FIG. 23, and the clearance at the other end represents the clearance S1b illustrated in FIG. 23, for example. Even if the central axis of the sealing plug and the central axis of the liquid introduction hole are thus out of alignment with each other, the clearance S1a and the clearance S12 are wider than the clearance S2 that is adjacent to those clearances along the stacked direction V in the circumferential directions of the sealing plug over 360°.

The battery according to the present invention is not limited to a structure in which a sealing plug is inserted into and joined to a lid. The battery according to the present invention may be of a structure in which the sealing plug is inserted into and joined to a receptacle. With such a structure, the receptacle and the lid represent a housing body. The receptacle has a liquid introduction hole in which the sealing plug is inserted.

The battery according to the present invention is not limited to a lithium ion battery. The battery according to the present invention may be a nickel hydrogen battery or a lead battery, for example. The battery according to the present invention is not limited to a secondary battery. The battery according to the present invention may be a primary battery. The charge/discharge body of the battery according to the present invention is not limited to a wound-type charge/discharge body in which a positive electrode, separators, and a negative electrode, each formed to an elongate shape, are bundled and wound. The charge/discharge body of the battery according to the present invention may be of a stacked layer type in which a positive electrode, separators, and a negative electrode, each formed to a rectangular shape, are alternately layered. The charge/discharge body of the battery according to the present invention may be of a stacked layer type in which a plurality of positive electrodes and a plurality of negative electrodes, formed to a relatively short shape, are alternately layered on a single separator of an elongate shape while facing each other across the separator. The charge/discharge body of such a structure has the positive electrodes and the negative electrodes facing each other across the separator by folding the separator into layers and stacking the separator layers. The battery according to the present invention is not limited to a structure that has a single charge/discharge body. The battery according to the present invention is applicable to a structure that has two or more charge/discharge bodies. The battery according to the present invention is not limited to a structure in which a charge/discharge body is sealed by a receptacle and a lid. The battery according to the present invention is applicable to a structure in which a charge/discharge body is sealed by a laminated film.

### Description of Reference Characters

1: Battery
100: Charge/discharge body
110: Positive electrode
120: Negative electrode
130: Separator
140: Electrolyte
200: Current collecting body
210: Positive electrode current collection plate
220: Negative electrode current collection plate
300: Electrode terminal
310: Positive electrode terminal
320: Negative electrode terminal
400, 400A, 400B, 400C, 400D, 400E, 400F, 400G, 400H, 400J,
400K: Outer casing
410: Receptacle (housing body)
420: Lid (housing body)
420a: Positive electrode insertion hole
420b: Negative electrode insertion hole
420c: Liquid introduction hole
420P: First penetrating portion
420Q: Second penetrating portion
421: Outer surface
422: End
423: First inner circumferential surface
424: End
425: Confronting surface
426: End (second end)
427: Second inner circumferential surface
428: End
429: Inner surface
430: Rupture valve
440: Sealing plug
440P: First insert
440Q: Second insert
441: Outer surface
442: End
443: First outer circumferential surface
444: End
445: Confronted surface
446: End (first end)
447: Second outer circumferential surface
448: End
449: Inner surface
500: Insulator
510: Insulation cover
520: Positive electrode insulation plate
530: Negative electrode insulation plate
600: Sealing body
610: Positive electrode gasket
620: Negative electrode gasket
710: Sealing plug
710Q: Second insert
717: Second outer circumferential surface
720: Sealing plug
720P: First insert
723: First outer circumferential surface
730: Sealing plug
730Q: Second insert
738: End (third end)
740: Sealing plug
740P: First insert
744: End (fourth end)
750: Sealing plug
750Q: Second insert
756: End (fifth end)
760: Lid
760Q: Second penetrating portion
766: End (sixth end)
770: Sealing plug
770R: Base
771: Outer surface
772: Outer circumferential surface
773: Abutting surface
780: Sealing plug
780P: First insert
780Q: Second insert
780x: Cavity
786: End (first end)
788: End
810: Sealing plug
810P: First insert
810Q: Second insert
810R: Base
820: Sealing plug
820Q: Second insert
C1: Central axis (of the first insert 440P of the sealing plug 820 and the liquid introduction hole 420c in the lid 420)
C2: Central axis (of the second insert 820Q of the sealing plug 820)
S1: Clearance (between the second inner circumferential surface 427 of the lid 420 and the second outer circumferential surface 447 of the sealing plug 440)
S1a: Clearance (at one end between the second inner circumferential surface 427 of the lid 420 and the second outer circumferential surface 447 of the sealing plug 820)
S1b: Clearance (at the other end between the second inner circumferential surface 427 of the lid 420 and the second outer circumferential surface 447 of the sealing plug 820)
S2: Clearance between the first inner circumferential surface 423 of the lid 420 and the first outer circumferential surface 443 of the sealing plug 440
L1, L1a, L1b: Length (of the clearance S1)
L2: Length (of the clearance S2)
W1: Welding bead
W2: Welding bead
V: Stacked direction (along which the sealing plug 440, the lid 420, and other members are stacked)
X: Longitudinal direction (of the battery 1)
Y: Transverse direction (of the battery 1)
Z: Heightwise direction (of the battery 1)

## Claims

1. A battery comprising:
a charge/discharge body including an electrolyte;
a housing body housing the charge/discharge body and including a liquid introduction hole for introducing the electrolyte; and
a sealing plug inserted in the liquid introduction hole and stacked on and joined to the housing body;
wherein the liquid introduction hole in the housing body includes
a first penetrating portion penetrating the housing body along a stacked direction along which the housing body and the sealing plug are stacked together and facing an outside of the housing body, and
a second penetrating portion penetrating the housing body along the stacked direction and facing an inside of the housing body, the second penetrating portion being contiguous to the first penetrating portion along the stacked direction and having a smaller opening than the first penetrating portion,
the first penetrating portion including
a first inner circumferential surface along the stacked direction, and
a confronting surface disposed transversely adjacent to the first inner circumferential surface and facing the stacked direction;
the second penetrating portion including
a second inner circumferential surface along the stacked direction, the second inner circumferential surface being disposed transversely adjacent to the confronting surface and positioned on the inside of the housing body relative to the first inner circumferential surface,
the sealing plug includes
a first insert inserted in the first penetrating portion along the stacked direction, and
a second insert inserted in the second penetrating portion along the stacked direction and contiguous to the first insert along the stacked direction, the second insert being smaller than the first insert in area facing the stacked direction,
the first insert including
a first outer circumferential surface facing the first inner circumferential surface of the housing body, and
a confronted surface disposed transversely adjacent to the first outer circumferential surface and facing the confronting surface of the housing body,
the second insert including
a second outer circumferential surface disposed transversely adjacent to the confronted surface and positioned on the inside of the housing body relative to the first outer circumferential surface, the second outer circumferential surface facing the second inner circumferential surface of the housing body, and
a length of a clearance between the second inner circumferential surface of the housing body and the second outer circumferential surface of the sealing plug is larger at least partly than a length of a clearance between the first inner circumferential surface of the housing body and the first outer circumferential surface of the sealing plug.

2. The battery according to claim 1, wherein the length of the clearance between the second inner circumferential surface of the housing body and the second outer circumferential surface of the sealing plug is larger than the length of the clearance between the first inner circumferential surface of the housing body and the first outer circumferential surface of the sealing plug.

3. The battery according to claim 1, wherein a first end of the sealing plug that is positioned at a boundary between the confronted surface and the second outer circumferential surface is spaced at least partly from a second end of the housing body that is positioned at a boundary between the confronting surface and the second inner circumferential surface.

4. The battery according to claim 3, wherein the first end is spaced from the second end.

5. The battery according to claim 1, wherein the confronted surface of the sealing plug is held in partial surface contact with the confronting surface of the housing body in a region from the first inner circumferential surface of the housing body to the second outer circumferential surface of the sealing plug along directions across the stacked direction.

6. The battery according to claim 1, wherein the second insert of the sealing plug and the second penetrating portion of the housing body are not attached to each other by press-fitting.

7. The battery according to claim 1, wherein the sealing plug and the housing body are not attached to each other by press-fitting.

8. The battery according to claim 1, wherein the second outer circumferential surface of the sealing plug includes a portion progressively constricted in directions across the stacked direction from outside to inside of the housing body.

9. The battery according to claim 1, wherein the first outer circumferential surface of the sealing plug includes a portion progressively constricted in directions across the stacked direction from the outside to the inside of the housing body.

10. The battery according to claim 1, wherein a third end, positioned on the inside of the housing body, of the second outer circumferential surface of the sealing plug is of an arcuate shape or a straight shape slanted with respect to the stacked direction.

11. The battery according to claim 1, wherein a fourth end positioned at a boundary between the first outer circumferential surface and the confronted surface of the sealing plug is of an arcuate shape or a straight shape slanted with respect to the stacked direction.

12. The battery according to claim 1, wherein a fifth end positioned at a boundary between the confronted surface and the second outer circumferential surface of the sealing plug is of an arcuate shape or a straight shape slanted with respect to the stacked direction.

13. The battery according to claim 1, wherein a sixth end positioned at a boundary between the confronting surface and the second inner circumferential surface of the housing body is of an arcuate shape or a straight shape slanted with respect to the stacked direction and spaced from the second outer circumferential surface of the sealing plug.

14. The battery according to claim 1, wherein the sealing plug includes a base contiguous to the first insert along the stacked direction from the outside of the housing body, and
the base is joined to an outer surface positioned on the outside of the housing body, along the stacked direction.

15. The battery according to claim 1, wherein a minimum value of the length of the clearance between the second inner circumferential surface of the housing body and the second outer circumferential surface of the sealing plug is larger than a maximum value of the length of the clearance between the first inner circumferential surface of the housing body and the first outer circumferential surface of the sealing plug.

16. The battery according to claim 1, wherein, in any cross section of the sealing plug and the housing body parallel to the stacked direction including a central axis of the liquid introduction hole,
the length of the clearance at an end side of the sealing plug between the second outer circumferential surface and the second inner circumferential surface of the housing body is larger than the length of the clearance at the end side of the sealing plug between the first outer circumferential surface and the first inner circumferential surface of the housing body, and
the length of the clearance at another end side of the sealing plug between the second outer circumferential surface and the second inner circumferential surface of the housing body is larger than the length of the clearance at the other end side of the sealing plug between the first outer circumferential surface and the first inner circumferential surface of the housing body.

17. The battery according to claim 1, wherein the first insert and the second insert are formed by press forming of a flat sheet of metal in the stacked direction.

18. A method of manufacturing the battery according to claim 1, comprising:
a first step of, while the confronting surface of the housing body and the confronted surface of the sealing plug are facing each other in the stacked direction, bringing the housing body and the sealing plug closer to each other along the stacked direction until the housing body and the sealing plug are attached to each other; and
a second step of welding the housing body and the sealing plug to each other after the first step.

19. The method of manufacturing the battery according to claim 18, further comprising:
a step of using the sealing plug that is subjected to press forming in the stacked direction or forming the sealing plug by press forming of a flat sheet of metal in the stacked direction.
